# EUROPÄISCHE PATENTSCHRIFT

(11) **EP 1 222 054 B1**
(45) Veröffentlichungstag und Bekanntmachung des Hinweises auf die Patenterteilung: **27.10.2004**
(21) Anmeldenummer: 00966167.9
(22) Anmeldetag: 17.10.2000
(51) Int. Cl.: B23K 37/047

(54) **VERFAHREN UND VORRICHTUNG ZUM BEARBEITEN VON BAUTEILEN**
METHOD AND DEVICE FOR MACHINING COMPONENTS
PROCEDE ET DISPOSITIF POUR USINER DES PIECES

(30) Priorität: 18.10.1999 DE 19950079
(43) Veröffentlichungstag der Anmeldung: 17.07.2002
(73) Patentinhaber: ThyssenKrupp Technologies AG, 45128 Essen (DE)
(72) Erfinder: ALBER, Gerhard, 88213 Ravensburg (DE)
(74) Vertreter: Dahlkamp, Heinrich-Leo, Dipl.-Ing.
(86) Internationale Anmeldenummer: PCT/EP2000/010207
(87) Internationale Veröffentlichungsnummer: WO 2001/028735

(56) Entgegenhaltungen:
- WO-A-97/03787
- DE-A- 19 713 860
- US-A- 5 500 507
- PATENT ABSTRACTS OF JAPAN vol. 9, no. 268 (M-424) [1991], 25. Oktober 1985 (1985-10-25) & JP 60 115375 A (MAZDA K.K.), 21. Juni 1985 (1985-06-21)
- PATENT ABSTRACTS OF JAPAN vol. 9, no. 38 (M-358) [1761], 19. Februar 1985 (1985-02-19) & JP 59 179275 A (NASHIYONARU JIYUUTAKU SANGYO K.K.), 11. Oktober 1984 (1984-10-11)

## Beschreibung

Die Erfindung betrifft ein Verfahren und eine Vorrichtung zum Bearbeiten von Bauteilen, wie sie insbesondere bei der Herstellung von Metallblechen Anwendung finden, vorzugsweise beim Laserschweißen verschiedener blechförmiger Bauteile.

Ein gattungsgemäßes Verfahren gemäß Oberbegriff der Patentansprüche 1 und 2 und eine gattungsgemäße Vorrichtung gemäß Oberbegriff des Patentanspruches 6 sind aus der FR 2 769 531 A1 bekannt. Die dort beschriebene Spannvorrichtung ist für ein Teil aus nichtmagnetischer Folie, wie z.B. ein Aluminiumblech vorgesehen, um einen Streifen von dem Teil geradlinig abzuschneiden, wobei die Befestigung des Folienteils oder eines Bleches auf einem Tisch erfolgt. Die Spannvorrichtung umfasst dabei eine regelmäßige Anordnung von Permanentmagneten unter dem Tisch und zum Einspannen der Folien auf den Folien aufliegende Platten aus ferromagnetischem Material. Die Auflagefläche dieser als Platten ausgebildeten Spannelemente ist naturgemäß an die Form der ebenen, einzuspannenden, nichtmagnetischen Folien angepasst.

Bei dem zuvor beschriebenen Verfahren ist es außerdem aus dem Stand der Technik bekannt, das Spannelement, beispielsweise in Form einer magnetisierbaren Stahlplatte, vertikal verstellbar mit dem Bearbeitungstisch zu verbinden. Wird nun ein zu bearbeitendes nicht magnetisches Bauteil auf die Bauteilauflage des Bearbeitungstisches gelegt, wird das Spannelement herabgefahren und mittels Aktivierung der Spannmagnete gegen das zu bearbeitende Bauteil angedrückt. Anschließend ist eine Bearbeitung des derart fixierten Bauteils möglich. Nach der Bearbeitung wird das Spannelement wieder angehoben, sodass das bearbeitete Bauteil einer weiteren Bearbeitung oder einem weiteren Transport zugeführt werden kann. Auch hierbei ergibt sich, dass die Ausbildung eines vertikal verstellbaren Spannelementes einen nicht unerheblichen Raumbedarf erzeugt. Die bewegbare Anordnung des Spannelementes belastet zudem den konstruktiven Aufwand im Bereich des Bearbeitungstisches, sodass für andere Anwendungen und Bearbeitungsmöglichkeiten das Raumangebot im Bereich des Bearbeitungstisches eingeengt wird.

Aus dem Stand der Technik der DE 195 26 466 C1 (vgl. auch die korrespondierende WO 97/03 787 A1) sind ein derartiges Verfahren und eine entsprechende Vorrichtung zum Schneiden und/oder Verschweißen von Blechen bekannt. Bei dem bekannten Verfahren werden eine Mehrzahl von Bearbeitungstischen verwendet, die umlaufend transportiert werden und durchlaufen eine Mehrzahl von Positionen, wie im Folgenden beschrieben wird. In einer ersten Position wird auf dem Bearbeitungstisch ein erstes Bauteil positioniert und fixiert. In einer zweiten dazu beabstandeten Position wird ein zweites Bauteil auf den Bearbeitungstisch so angeordnet, dass es mit dem ersten Bauteil stumpf aneinander liegt. In einer dritten Position werden die beiden Bauteile mit Hilfe einer Bearbeitungsvorrichtung miteinander verbunden, wozu der Bearbeitungstisch durch den Bearbeitungsbereich der Bearbeitungsvorrichtung geschoben wird. In einer vierten Position wird dann das fertige Bauteil vom Bearbeitungstisch abgenommen. Anschließend wird der Bearbeitungstisch zur ersten Position, der Ausgangsposition, zurücktransportiert. Dieses Verfahren ermöglicht zwar einen eindeutig definierten Materialfluss von der ersten bis zur vierten Position des Bearbeitungstisches, jedoch ergibt sich ein sehr großer Raumbedarf, der sich insbesondere durch die Transportanlage zum Transportieren der Bearbeitungstische ergibt.

Der vorliegenden Erfindung liegt das technische Problem zu Grunde, die aus dem Stand der Technik bekannten gattungsgemäßen Verfahren und Vorrichtungen hinsichtlich des Spannens der Bauteile aus nichtmetallischen Werkstoffen im Hinblick auf die gewünschte Bearbeitung zu verbessern.

Das oben genannte technische Problem wird erfindungsgemäß durch ein gattungsgemäßes Verfahren gemäß Patentanspruch 1 gelöst, bei dem mindestens zwei Bauteile auf dem Bearbeitungstisch positioniert und fixiert werden, den Bauteilen mindestens zwei Spannelemente zugeordnet sind, die an die Form einer in der Ebene der Auflagefläche verlaufenden Bearbeitungslinie, die keine eindimensionale Gerade ist, angepasst sind und entlang mindesten einer Berührungslinie der Bauteile miteinander einen Bereich vorgegebener Breite freigeben und die Bauteile entlang der mindestens einen Berührungslinie miteinander verbunden, vorzugsweise verschweißt werden.

Bei dem gattungsgemäßen Verfahren gemäß Patentanspruch 2 wird das Problem dadurch gelöst, dass das oder die Spannelemente an die Form einer in der Ebene der Auflagefläche verlaufenden Bearbeitungslinie, die keine eindimensionale Gerade ist, angepasst und mit vorgegebenen konstanten Abstand zur Bearbeitungslinie angeordnet sind und das Bauteil entlang der mindestens einen Linie zertrennt wird.

Die Unteransprüche 3 bis 5 enthalten ergänzende Verfahrensvorschläge dazu.

Die gattungsgemäße Vorrichtung gemäß Anspruch 6 sieht zur Lösung des Problems erfindungsgemäß vor, dass das Spannelement an die Form einer in der Ebene der Auflagefläche verlaufenden Bearbeitungslinie, die keine eindimensionale Gerade ist, angepasst ist und das Bauteil zumindest entlang des zu bearbeitenden Bereiches des Bauteils freigibt.

Erfindungsgemäß können in zuverlässiger Weise bei zweidimensionalen Bearbeitungslinien, sei es zum Verbinden zweier Bauteile oder zum Zertrennen eines Bauteiles, die Bauteile so fixiert werden, dass zu beiden Seiten der Bearbeitungslinie ein sicheres Befestigen des nicht magnetischen Bauteils gewährleistet ist. Somit ist ein flexibles Bearbeiten unterschiedlicher Bauteile, die gekrümmte oder eckig verlaufende Bearbeitungslinien aufweisen, möglich.

Für eine Verbindung von zwei Bauteilen werden diese auf dem Bearbeitungstisch positioniert und fixiert. Die den Bauteilen zugeordneten Spannelemente, die auf der den Spannmagneten abgewandten Seite des nicht magnetischen Bauteils angeordnet sind, geben entlang der mindestens einen Bearbeitungslinie, die vorliegend die Berührungslinie der beiden Bauteile darstellt, einen Bereich vorgegebener Breite frei. Somit kann der Endeffektor der Bearbeitungseinrichtung in diesem freigegebenen Bereich die beiden Bauteile miteinander verbinden, vorzugsweise verschweißen.

Soll dagegen ein Bauteil zertrennt werden, so wird dieses zunächst auf dem Bearbeitungstisch positioniert und fixiert. Mindestens zwei Spannelemente, die in ihrer Form den beiden nach dem Zertrennen des Bauteils vorliegenden Bauteilen entsprechen, werden so positioniert, dass sie einen Bereich mit vorgegebener Breite entlang der mindestens einen Bearbeitungslinie freigeben. Anschließend wird das Bauteil entlang dieser Linie zertrennt.

In beiden zuvor beschriebenen Fällen gewährleisten die Spannelemente, dass benachbart zur Bearbeitungslinie das mindestens eine Bauteil zuverlässig gegen die Bauteilauflage des Bearbeitungstisches angedrückt wird. Dadurch wird verhindert, dass während der Bearbeitung das Bauteil bzw. die Bauteile ihre Position verändern. Da das Spannelement an die Form des Bauteils angepasst wird, kann dieses auch als bauteilspezifisches Spannelement bezeichnet werden.

In bevorzugter Weise wird nach der Bearbeitung des mindestens einen Bauteils zunächst das mindestens eine Spannelement vom Bearbeitungstisch abgenommen. Anschließend wird das mindestens eine Spannelement auf mindestens einem Ablagetisch positioniert und das bearbeitete Bauteil bzw. die bearbeiteten nicht magnetischen Bauteile werden vom Bearbeitungstisch abgenommen. Das auf dem Ablagetisch abgelegte Spannelement kann dann für einen neuen Beladevorgang abgenommen werden und zusammen mit mindestens einem neuen, zu bearbeitenden nicht magnetischen Bauteil auf dem in der Beladeposition angeordneten Bearbeitungstisch positioniert werden. Damit wird ein Kreislauf von Spannelementen erzeugt, die ausgehend vom Ablagetisch zum Bearbeitungstisch in der Beladeposition transportiert werden, um ein nichtmagnetisches Bauteil auf der Bauteilauflage mit Spannmagneten zu positionieren und zu fixieren. Der Bearbeitungstisch wird dann zur Bearbeitungsposition verstellt, in der die Bearbeitung des mindestens einen Bauteils vorgenommen wird. Anschließend wird das Spannelement wieder zurück zum Ablagetisch transportiert. Somit können die beiden Positionen, in denen einerseits der Bearbeitungstisch beladen wird und andererseits wieder entladen wird, getrennt voneinander eingerichtet werden.

Somit ergibt sich bei dem erfindungsgemäßen Verfahren eine hohe Flexibilität bei der Bearbeitung von nicht magnetischen Bauteilen. Zum einen kann die Form der Spannelemente an die Form der zu bearbeitenden Bauteile angepasst werden. Zum anderen bietet die Führung der Spannelemente in einem Kreislauf den Vorteil, dass ein gerichteter Materialfluss eingerichtet werden kann, ohne dass stationär vorgesehene Spannelemente einen hohen konstruktiven Aufwand erfordern, der für ein Positionieren und Bearbeiten an ein und der gleichen Position eines Bearbeitungstisches notwendig wäre.

Selbstverständlich kann das beschriebene Verfahren unter Verwendung der Spannelemente auch dann angewendet werden, wenn nur ein Teil der zu bearbeitenden Bauteile nichtmagnetisch sind und die anderen Bauteile magnetisch. Dieses kann insbesonere dann vorteilhaft sein, wenn magnetische und nichtmagnetische Bauteile miteinander verschweißt werden sollen.

Das oben aufgezeigte technische Problem wird auch durch eine aus der US-A 4,674,949 an sich bekannte Vorrichtung zum Greifen von zwei separaten Gegenständen gemäß Anspruch 12 mit einer Greifvorrichtung mit einem Greifarm, mit einem am Greifarm befestigten Saugrahmen und mit einer Mehrzahl von Saugelementen, die am Saugrahmen angeschlossen sind dadurch gelöst, dass eine Greifvorrichtung zum Greifen des ersten Gegenstandes am Greifarm befestigt ist und dass sich die Saugelemente durch im ersten Gegenstand ausgebildete Öffnungen hindurch erstrecken und den zweiten Gegenstand greifen. Der zuvor beschriebenen Ausgestaltung kommt an sich unabhängig von der oben beschriebenen erfindungsgemäßen Vorrichtung ein selbständiger erfinderischer Charakter zu.

Durch die zuvor beschriebene Ausbildung der Vorrichtung zum Greifen kann in vorteilhafter Weise in einem Arbeitsgang zunächst der erste Gegenstand gegriffen und zum Ablageort des zweiten Gegenstandes transportiert werden. Dort werden die Saugelemente bis an die Oberfläche des zweiten Gegenstandes verfahren, wozu im ersten Gegenstand entsprechend der Positionen der Saugelemente Öffnungen ausgebildet sind. Der Greifarm kann anschließend beide Gegenstände zu dem gemeinsamen Ablageort transportieren. Dort ist das Absetzen beider Gegenstände derart möglich, dass der erste und der zweite Gegenstand zueinander ausgerichtet und zentriert positioniert werden können.

Dazu sind in bevorzugter Weise sowohl der Saugrahmen, die Anordnung der Saugelemente als auch die Greifvorrichtung bauteilspezifisch ausgebildet. Ist der erste Gegenstand aus einem magnetischen Werkstoff hergestellt, so kann die Greifvorrichtung neben der allgemein möglichen mechanischen Ausbildung auch magnetisch wirkend ausgebildet sein. Der zweite Gegenstand dagegen kann aus einem beliebigen Material sein, lediglich seine Oberfläche muss das Anhaften von Saugelementen ermöglichen.

In weiter bevorzugter Weise sind der erste Gegenstand als Spannelement aus einem magnetischen Werkstoff und der zweite Gegenstand als Bauteil aus einem nicht magnetischen Werkstoff ausgebildet. Dadurch kann die Vorrichtung zum Greifen von zwei separaten Gegenständen bei einer zuvor beschriebenen Vorrichtung zum Bearbeiten von aus einem nicht magnetischen Werkstoff bestehenden Bauteilen eingesetzt werden. Insbesondere kann bei dieser Vorrichtung der Vorteil genutzt werden, dass lediglich ein Greifarm, der vorzugsweise von einem entsprechenden Roboter manipuliert wird, notwendig ist, um sowohl das Spannelement als auch das zu bearbeitende Bauteil auf einem Bearbeitungstisch zu positionieren. Da zudem beide Gegenstände, also das Spannelement und das Bauteil, gleichzeitig abgesetzt werden, wird erheblich weniger Zeit dafür benötigt, als wenn der Greifarm zunächst das Bauteil und danach das Spannelement zum Bearbeitungstisch transportiert.

Die zuvor beschriebenen Verfahren und Vorrichtungen werden in bevorzugter Weise für eine zweidimensionale Bearbeitung ebener Bauteile angewendet. Jedoch wird hervorgehoben, dass die Verfahren und die Vorrichtungen nicht auf eine Bearbeitung zweidimensionaler Bauteile beschränkt sind, sondern ebenso auch für die dreidimensionale Bearbeitung von Bauteilen geeignet sind. Wie bereits ausgeführt wurde, können die Verfahren und die Vorrichtungen für ein Zusammenfügen, insbesondere ein Verschweißen mittels einer Laser-Schweißanlage angewendet werden. Darüber hinaus können die Verfahren und die Vorrichtungen auch für das Zertrennen eines Bauteils angewendet werden, wie ohne weiteres ersichtlich ist. Auch wenn nachfolgend die Erfindung im Detail anhand von Ausführungsbeispielen einer Laser-Schweißanlage beschrieben wird, ist diese nicht auf diese Anwendung beschränkt.

Im Folgenden wird die Erfindung anhand von Ausführungsbeispielen näher erläutert, wobei auf die Zeichnung bezug genommen wird. In der Zeichnung zeigen
- Fig. 1: eine Vorrichtung zum Bearbeiten von Bauteilen mit zwei verstellbaren Bearbeitungstischen in einer Draufsicht,
- Fig. 2: die in Fig. 1 dargestellt Vorrichtung in einer Seitenansicht quer zur Verstellrichtung,
- Fig. 3: die in den Fig. 1 und 2 dargestellte Vorrichtung in einer Ansicht längs zur Verstellrichtung,
- Fig. 4: eine Bauteilauflage für die in Fig. 5 dargestellten Bauteile,
- Fig. 5: eine geometrische Ausgestaltung von in der Bearbeitungseinrichtung zu verarbeitenden Bauteile,
- Fig. 6: eine erste Ausführungsform einer Laser-Schweißanlage in einer Draufsicht,
- Fig. 7: die in Fig. 6 dargestellte Laser-Schweißanlage in einer Seitenansicht,
- Fig. 8: eine zweite Ausführungsform einer Laser-Schweißanlage mit automatischer Zuführung von jeweils zwei miteinander zu verschweißenden Bauteilen in einer Draufsicht,
- Fig.9: ein Beispiel einer Laser-Schweißanlage mit automatischer Zuführung von drei miteinander zu verschweißenden Bauteilen in einer Draufsicht,
- Fig. 10: die in Fig. 9 dargestellte Laser-Schweißanlage in einer Seitenansicht,
- Fig. 11: eine geometrische Ausgestaltung der in der in den Fig. 8 und 9 dargestellten Laser-Schweißanlage zu verarbeitenden Bauteile,
- Fig. 12: eine Bauteilauflage für die in Fig. 11 dargestellten Bauteile, welche nicht in den Schutzumfang der Ansprüche fällt,
- Fig. 13: eine weitere Ausführungsform einer Laser-Schweißanlage mit einer Vorrichtung zum Bearbeiten vom aus einem nicht magnetischen Werkstoff bestehenden Bauteilen,
- Fig. 14: zwei bauteilspezifische Spannelemente in einer Draufsicht,
- Fig. 15: eine Vorrichtung zum Greifen von zwei separaten Gegenständen in einer Seitenansicht teilweise geschnitten,
- Fig. 16: eine Vorrichtung zum Bereitstellen von Bauteilen in einer Draufsicht,
- Fig. 17: die in Fig. 16 dargestellte Vorrichtung in einer ersten Arbeitsstellung in einer Seitenansicht,
- Fig. 18: die in Fig. 16 dargestellte Vorrichtung in einer zweiten Arbeitsposition in einer Seitenansicht,
- Fig. 19: eine Vereinzelungsvorrichtung zum Vereinzeln von aufeinanderliegenden Bauteilen in einer in den Fig. 16 bis 18 dargestellten Vorrichtung zum Bereitstellen von Bauteilen in einer Seitenansicht,
- Fig. 20: einen Teilausschnitt aus Fig. 19,
- Fig. 21: die in Fig. 19 dargestellte Vereinzelungsvorrichtung in einer Draufsicht und

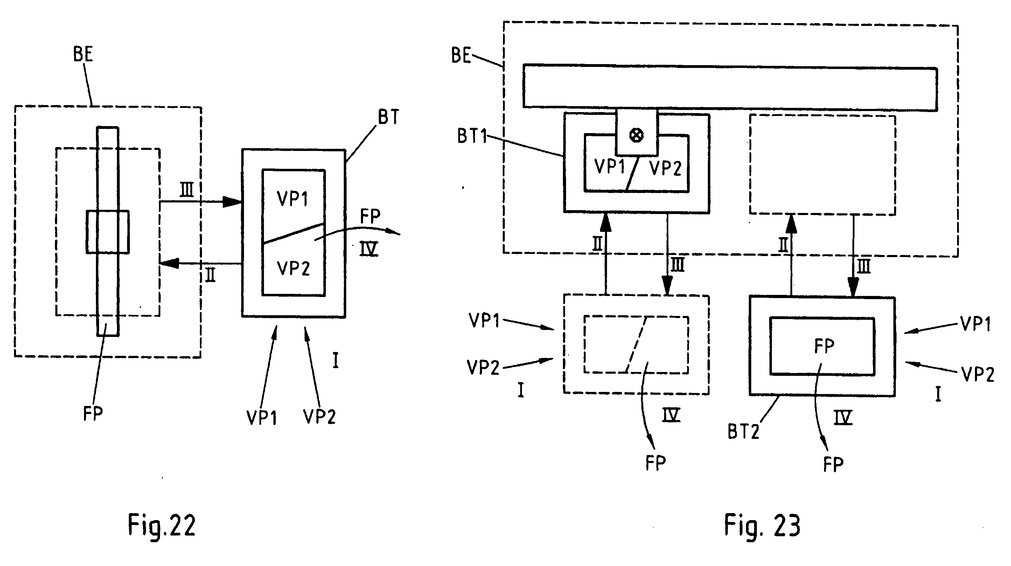

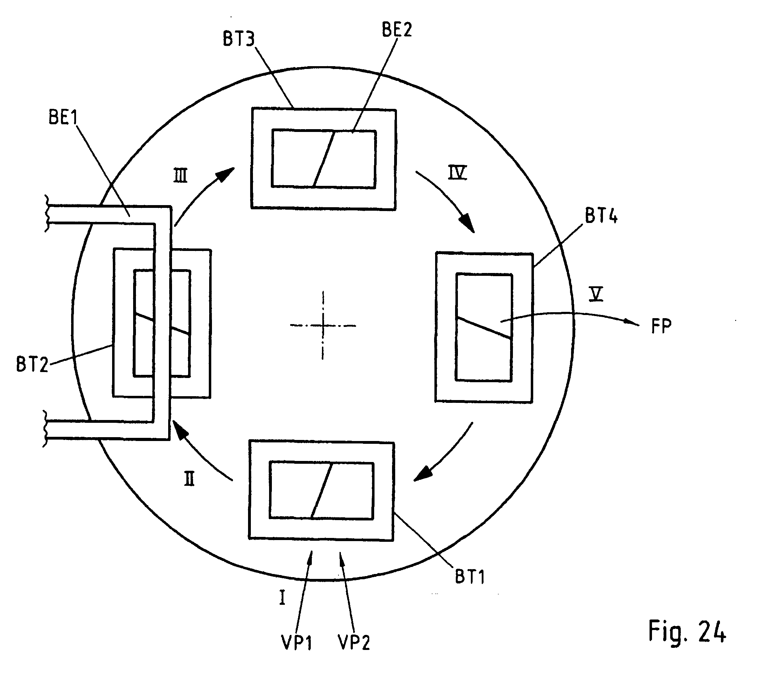

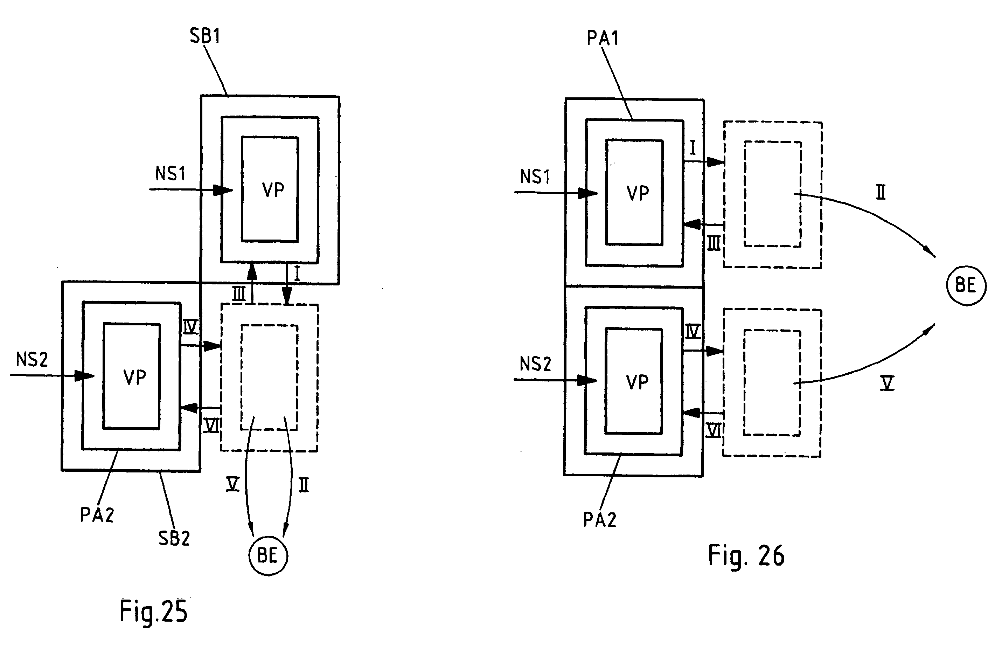

- Fig. 22-26: aus dem Stand der Technik bekannte Vorrichtungen zum Bearbeiten und Bereitstellen von Bauteilen.

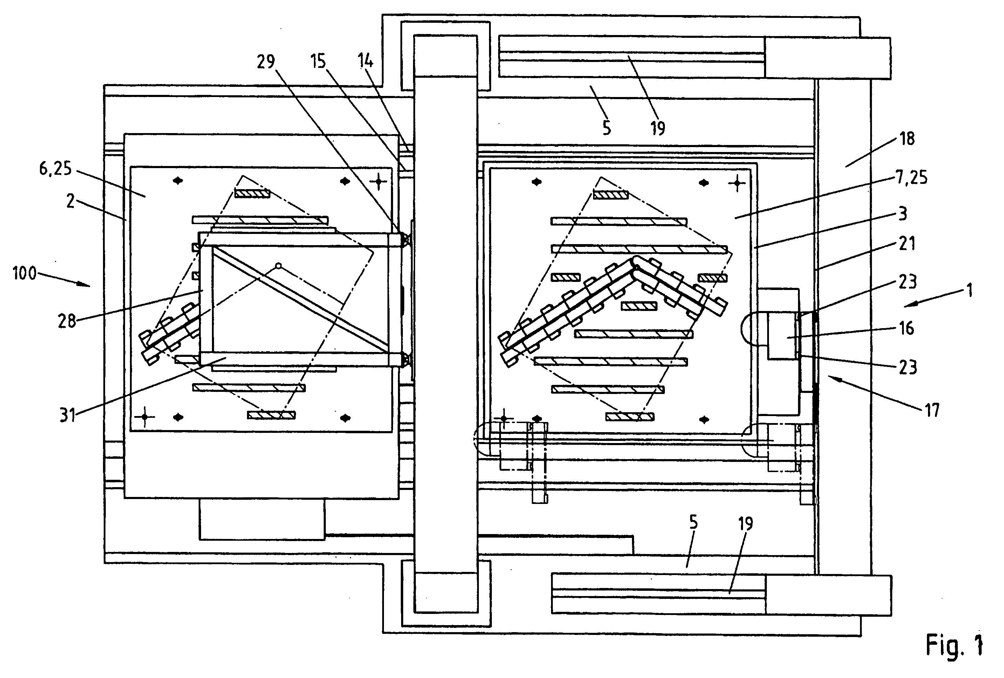

In den Fig. 1 bis 3 ist eine allgemein mit 100 bezeichnete Vorrichtung zum Bearbeiten von Bauteilen dargestellt, die eine Bearbeitungseinrichtung 1 und zwei Bearbeitungstische 2 und 3 aufweist. Weiterhin weist die Vorrichtung ein Grundgestell 4 sowie einen Aufbaurahmen 5 auf, an dem die Bearbeitungseinrichtung 1 sowie die Bearbeitungstische 2 und 3 beweglich befestigt sind.

Auf den Bearbeitungstischen 2 und 3 sind jeweils Befestigungsvorrichtungen 6 und 7 zum Fixieren mindestens eines Bauteils 8 angeordnet. Weiterhin sind Verstellmittel 9 vorgesehen, mit deren Hilfe die Bearbeitungstische 2 und 3 zwischen einer Beladeposition A und einer Bearbeitungsposition B innerhalb des Arbeitsbereiches der Bearbeitungseinrichtung 1 verstellt werden.

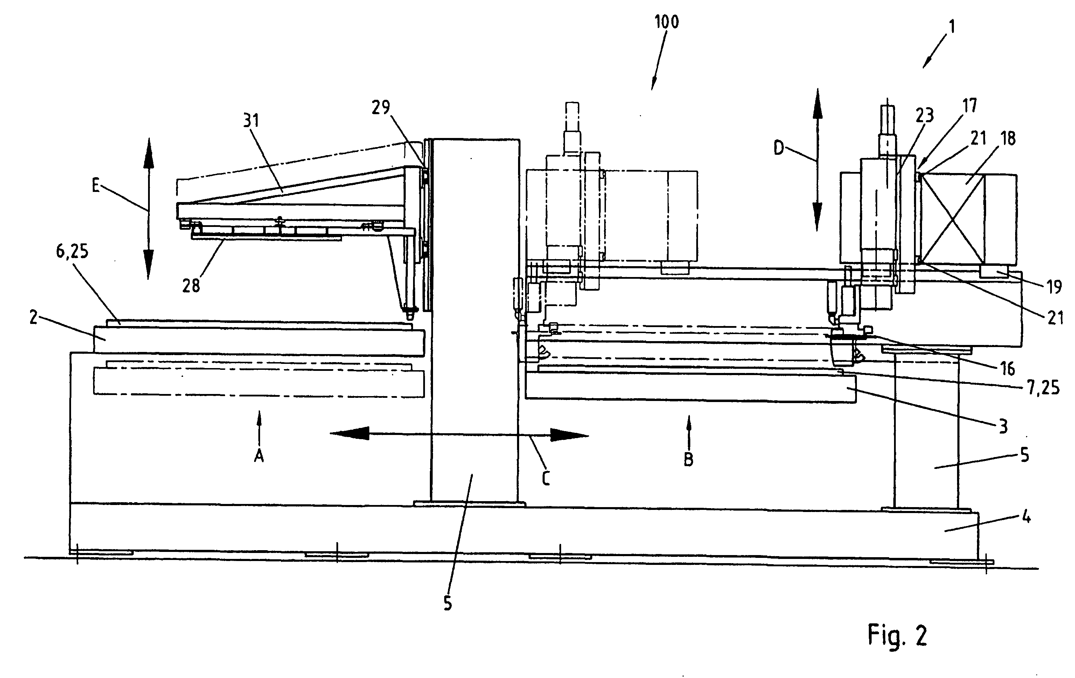

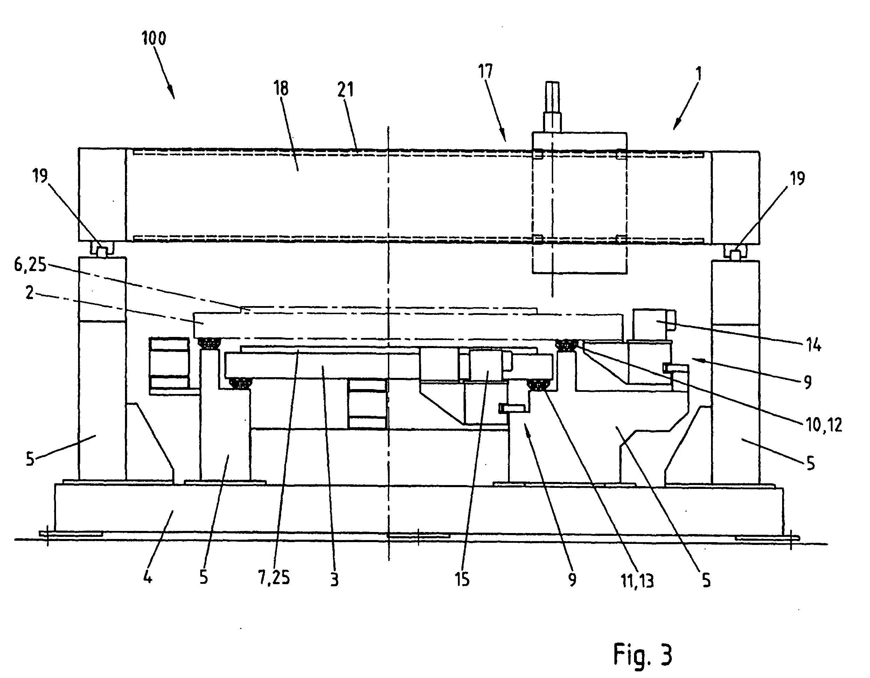

Wie insbesondere aus den Fig. 2 und 3 ersichtlich ist, sind die Bearbeitungstische 2 und 3 in verschiedenen Ebenen übereinander angeordnet und die Verstellmittel 9 verstellen die Bearbeitungstische 2 und 3 in beide Richtungen zwischen der Beladeposition A und der Bearbeitungsposition B, wie mit dem Doppelpfeil in Fig. 2 dargestellt ist. Dabei ist der Bearbeitungstisch 2 in einer oberen Ebene verstellbar angeordnet, während der Bearbeitungstisch 3 unterhalb des Bearbeitungstisches 2 verfahrbar angeordnet ist. Für die Verstellbarkeit der Bearbeitungstische 2 und 3 sind die Verstellmittel 9 als lineare Führungen 10 bzw. 11 und als damit in Eingriff stehende Schlitten 12 bzw. 13 ausgebildet. Weiterhin weisen die Verstellmittel 9 einen oberen linearen Antrieb 14 und einen unteren linearen Antrieb 15 auf. Da es auf die genaue Positionierung der Bearbeitungstische 2 und 3 sowohl in der Beladeposition A als auch in der Bearbeitungsposition B ankommt, sind entsprechende Positionierungsmittel wie beispielsweise Endschalter bzw. Meßvorrichtungen zum Bestimmen der linearen Position der Bearbeitungstische 2 und 3 in herkömmlicher Weise vorgesehen. Diese sind der Übersichtlichkeit halber in der in den Fig. 1 bis 3 dargestellten Ausführungsform weggelassen worden.

Die Bearbeitungseinrichtung 1, die vorliegend als Laser-Schweißeinrichtung ausgebildet ist, weist einen Endeffektor 16, der als Laser-Schweißkopf ausgebildet ist, sowie eine dreidimensional Kinematik 17 zum Verstellen des Endeffektors 16 relativ zum zu bearbeitenden Bauteil 8 bzw. relativ zu den Bearbeitungstischen 2 und 3 auf. Dazu ist die Bearbeitungseinrichtung 1 als Flächenportal 18 ausgebildet, wobei das Flächenportal 18 mit Hilfe von linearen Führungen und einem linear Antrieb entlang des Aufbaurahmens 5 in Verstellrichtung C der Bearbeitungstische verstellt werden kann. Weiterhin ist der Endeffektor 16 mittels einer Linearführung 21 sowie eines zugeordneten Linearantriebes am Portal 18 befestigt, um quer zur Verstellrichtung C der Bearbeitungstische 2 und 3 verstellt werden zu können. Zusätzlich dazu kann der Endeffektor 16 vertikal hin- und herverstellt werden, wie mit dem Pfeil D in Fig. 2 dargestellt ist. Dazu ist wiederum eine Linearführung 23 sowie ein Linearantrieb vorgesehen. Insbesondere aufgrund der Verstellbarkeit des Endeffektors 16 in vertikaler Richtung D ist es möglich, die Bearbeitung von auf den Bearbeitungstischen 2 und 3 angeordneten Bauteilen, die abhängig vom jeweiligen Bearbeitungstisch 2 oder 3 in einer unterschiedlichen Höhenposition angeordnet sind, zu bearbeiten. Dazu ist lediglich die Höhendifferenz zwischen den beiden Bearbeitungstischen 2 und 3 bei der Ansteuerung der vertikalen Position des Endeffektors 16 zu berücksichtigen.

Wie Fig. 2 darstellt, kann die Vorrichtung zum Bearbeiten des Bauteils verschiedene Positionen einnehmen. Mit durchgezogenen Linien sind die Bearbeitungstische 2 und 3 so dargestellt, dass der Bearbeitungstisch 2 in der Beladeposition A und das sich der Bearbeitungstisch 3 in der Bearbeitungsposition B befindet. In gestrichelten Linien sind jeweils die entgegengesetzten Positionen dargestellt, die sich nach einer linearen Verstellung beider Bearbeitungstische 2 und 3 ergeben. Darüber hinaus ist der Endeffektor 16 in einer in Verschieberichtung C verstellten Endposition dargestellt, wobei in gestrichelten Linien eine weitere Position weiter vorne in Verschieberichtung C dargestellt ist.

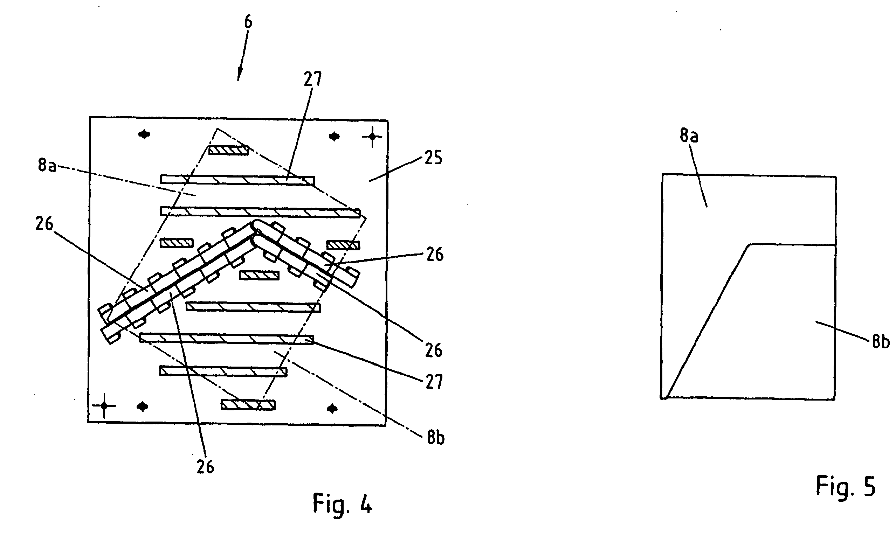

Fig. 4 zeigt die Befestigungsvorrichtung 6 zum Fixieren mindestens eines Bauteils 8. Dazu ist die Befestigungsvorrichtung als Bauteilauflage 25 ausgebildet, die an die Form der in Fig. 5 dargestellten Bauteile 8a und 8b angepasst ist. Auf der Bauteilauflage 25 sind als Spannmagnete ausgebildete Befestigungselemente 26 zu beiden Seiten der von den beiden Bauteilen 8a und 8b vorgegebenen Schweißnaht angeordnet. Weiterhin sind Bauteilauflageleisten 27 auf der Bauteilauflage 25 verteilt angeordnet, sodass die ebenen Bauteile 8a und 8b in einer definierten Position angeordnet werden können.

Wie die Fig. 1 und 2 weiterhin zeigen, ist ein Anschlagrahmen 28 zum Justieren der beiden Bauteile 8a und 8b vertikal verstellbar oberhalb der Position A angeordnet. An dem Anschlagrahmen 28 ist ein bauteilspezifisches Anschlaglineal befestigt, an dem das Bauteil 8a bzw. 8b ausgerichtet werden kann. Das Anschlaglineal ist der Übersichtlichkeit halber nicht in den Figuren dargestellt. Der Anschlagrahmen 28 ist mit Hilfe einer linearen Führung 29 und eines linearen Antriebes über ein Gestell 31 am Aufbaurahmen 5 befestigt.

Zum Justieren von Bauteilen 8a und 8b wird der Anschlagrahmen 28 mit dem Anschlaglineal in Richtung der noch leeren Bauteilauflage 25 eines der Bearbeitungstische 2 und 3 herabgefahren und das Anschlaglineal wird in Anlage mit der Bauteilauflage gebracht. Anschließend werden die Bauteile 8a und 8b mittels eines weiter unten beschriebenen Einfügeroboters eingelegt und mit der Anschlagkante des Anschlaglineals in Anlage gebracht. Dazu weist der Anschlagrahmen 28 einen ausreichenden Abstand zur Bauteilauflage 25 auf, sodass der Fügeroboter seitlich in den Bereich unterhalb des Anschlagrahmens hineingreifen und das Bauteil 8a bzw. 8b positionieren kann.

Nach dem Positionieren der Bauteile 8a und 8b werden die Spannmagnete 26 aktiviert und somit die Bauteile 8a und 8b in ihrer durch den Anschlagrahmen 28 vorgegebenen Position auf der Bauteilauflage 25 befestigt. Anschließend wird der Anschlagrahmen 28 mit dem Gestell 31 wieder nach oben verfahren, wie auch mit dem Doppelpfeil E dargestellt ist.

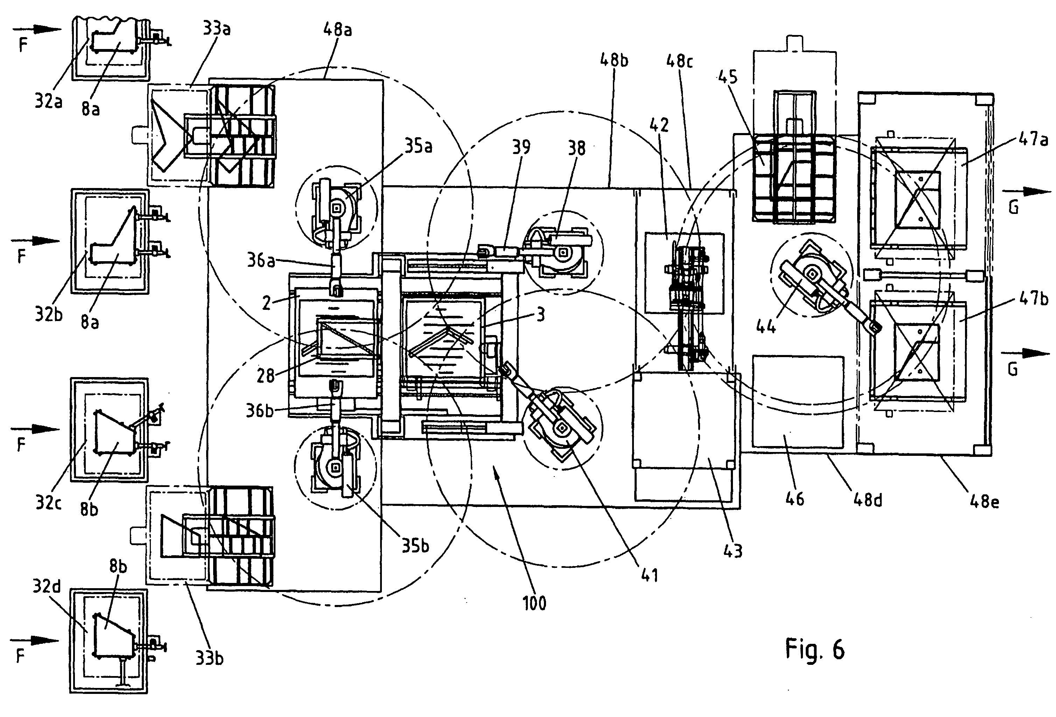

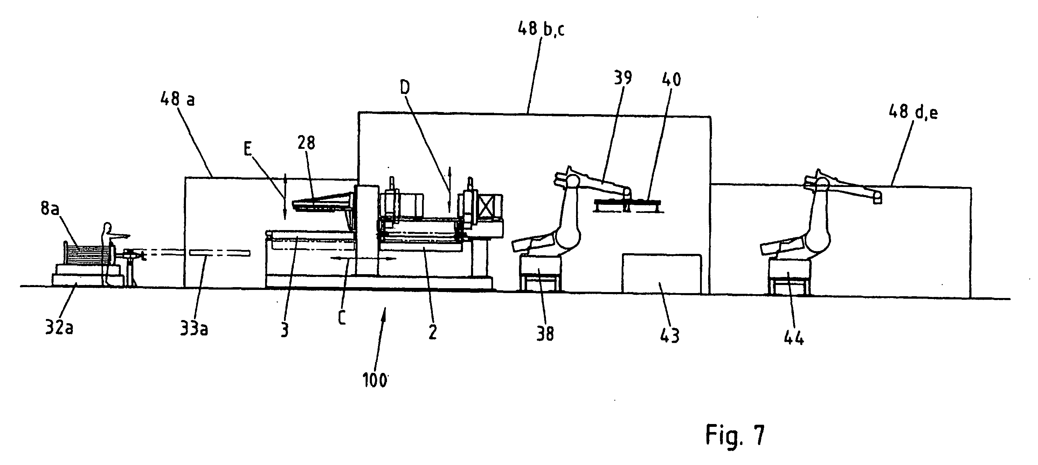

In den Fig. 6 und 7 ist eine erste Ausgestaltung einer Laser-Schweißanlage dargestellt, in der die zuvor beschriebene und in den Fig. 1 bis 3 im Detail dargestellte Vorrichtung 100 zum Bearbeiten von Bauteilen eingesetzt wird. Aus der folgenden Beschreibung der Funktionsweise der Laser-Schweißanlage ergibt sich der vorteilhafte gerichtete Materialfluss sowie weitere vorteilhafte Eigenschaften, die mit dem Einsatz der Vorrichtung 100, die auch als Doppelverschiebetisch bezeichnet werden kann, verbunden sind.

Bei dieser Laser-Schweißanlage sind auf Paletten 32a, 32b, 32c und 32d Stapel von Bauteilen 8a und 8b paarweise angeordnet. Jeweils eine Bedienungsperson nimmt von den Stapeln entweder Bauteile 8a oder Bauteile 8b ab und positioniert diese auf einem Vorpositioniertisch 33a oder 33b.

Beide Vorpositioniertische 33a und 33b sind innerhalb eines ersten Sicherheitsbereiches 48a angeordnet, wobei die Auflage des Vorpositioniertisches 33a bzw. 33b aus dieser Schutzzone 48a herausziehbar ist, sodass die Bedienungsperson jeweils ein Bauteil 8a bzw. 8b an einer vorgegebenen Position auf der Ablagefläche des Vorpositioniertisches 33a oder 33b ablegen kann. Die Ablagefläche wird dann in den Sicherheitsbereich 48a eingeschoben und steht dann einer Handhabung dort zur Verfügung.

Zum Zusammenfügen der beiden Bauteile 8a und 8b sind zwei Fügeroboter 35a und 35b vorgesehen, die mit Hilfe ihrer Greifarme 36a und 36b und daran befestigter Saugrahmen jeweils ein Bauteil 8a oder 8b von den entsprechenden Vorpositioniertischen 33a oder 33b abnehmen und in der zuvor beschriebenen Weise mit Hilfe des Anschlagrahmens 28 auf jeweils einem der Bearbeitungstische 2 oder 3, der sich in der Beladeposition befindet, positioniert. Somit sind die manuell zugeführten Bauteile 8a und 8b auf dem Bearbeitungstisch 2 bzw. 3 positioniert und fixiert. Dazu weist der Greifarm 36a bzw. 36b eine schwimmende Fügehand für eine andruckgesteuerte Positionierung der Bauteile 8a bzw. 8b auf.

Entsprechend der oben beschriebenen Funktionalität des Doppelverschiebetisches 100 liegt am Ende eines Bearbeitungszyklus ein aus den beiden Bauteilen 8a und 8b zusammengeschweißtes Bauteil 8 vor, das vor einem nächsten Bearbeitungszyklus vom Bearbeitungstisch 2 bzw. 3 abgenommen und einer weiteren Bearbeitung zugeführt wird.

In den Fig. 6 und 7 ist jeweils in der rechten Hälfte eine mögliche Ausgestaltung einer Weiterbehandlung dargestellt. Ein Entnahmeroboter 38 nimmt das fertiggestellte Bauteil 8 vom Bearbeitungstisch 3 mit Hilfe seines Greifarmes 39 und des damit verbundenen Saugrahmens 40 ab. Im Zusammenwirken mit einen ähnlich ausgebildeten Wenderoboter 41 kann das verschweißte Bauteil 8 gewendet werden. Anschließend wird das Bauteil 8 auf einem Sickenfahrzeug 42 abgelegt. Das Sickenfahrzeug 42 führt das Bauteil 8 in eine Sickenpresse 43 ein, wenn unterschiedlich dicke Bauteile 8a und 8b miteinander verschweißt worden sind. Im dünneren Abschnitt des verschweißten Bauteils 8 werden dann eine Mehrzahl von Sicken eingeprägt, um den Dickenunterschied auszugleichen. Anschließend wird das Sickenfahrzeug wieder in die Ausgangsposition zurück verstellt und mit Hilfe eines Stapelroboters 44 angenommen. Der Stapelroboter 44 ist wie die vorangehend beschriebenen Roboter ausgebildet. Zunächst besteht die Option, dass der Stapelroboter 44 das Bauteil 8 auf einem aus dem Sicherheitsbereich 48d herausziehbaren Inspektionstisch 45 ablegt, auf dem eine Inspektion des fertiggestellten Bauteil 8 erfolgt. Falls die Inspektion bzw. eine während des Verschweißens in der Bearbeitungseinrichtung 1 erfolgte Qualitätsüberprüfung zu einem negativen Ergebnis gekommen ist, wird das Bauteil 8 vom Stapelroboter 44 auf einer Holzpalette 46 abgelegt und aus dem Materialfluss herausgenommen. Im Falle einer positiven Qualitätsprüfung legt der Stapelroboter 44 das Bauteil 8 auf eine von zwei Paletten 47a oder 47b ab, die bei geeigneter Stapelhöhe abtransportiert werden.

Aus den Fig. 6 und 7 ergibt sich weiterhin, dass eine Mehrzahl von Sicherheitsbereichen 48a bis 48e mit Hilfe von geeigneten Schutzzäunen eingerichtet sind, um den Sicherheitsanforderungen einer automatischen Materialbearbeitungsanlage gerecht zu werden. Da die Einrichtung von Sicherheitsbereichen jedoch nicht zum Gegenstand der Erfindung gehören, wird auf eine detailliertere Darstellung der Einteilung der Sicherheitsbereiche verzichtet.

Aus der zuvor gegebenen Darstellung des Bearbeitungsablaufes ergibt sich der gerichtete Materialfluss der mit den Eingangspfeilen F einerseits und den Ausgangspfeilen G in Fig. 6 kenntlich gemacht worden ist.

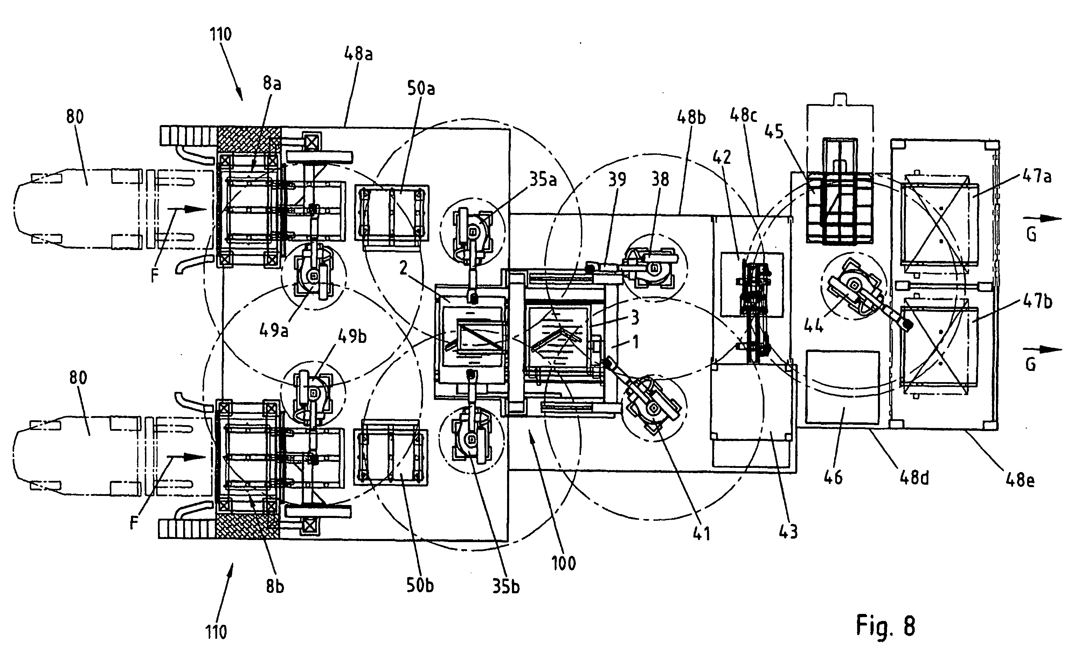

In Fig. 8 ist eine weitere Ausführungsform einer Laser-Schweißanlage dargestellt, wobei gleiche Bezugszeichen gleiche Bauteile bezeichnen, wie sie im Zusammenhang mit der zuvor beschriebenen Ausführungsform im Detail dargestellt worden sind.

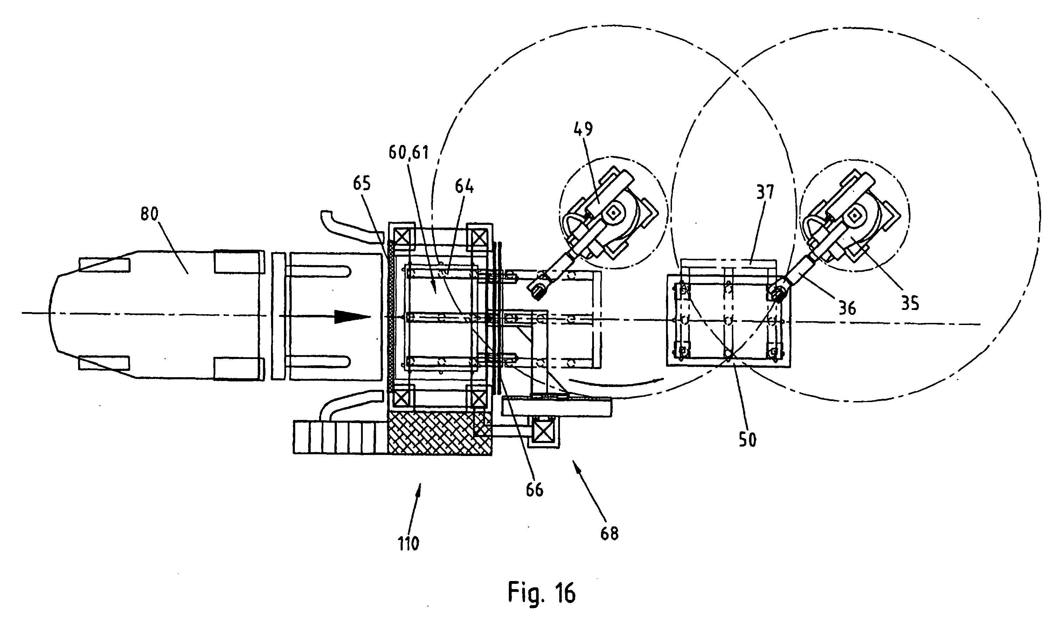

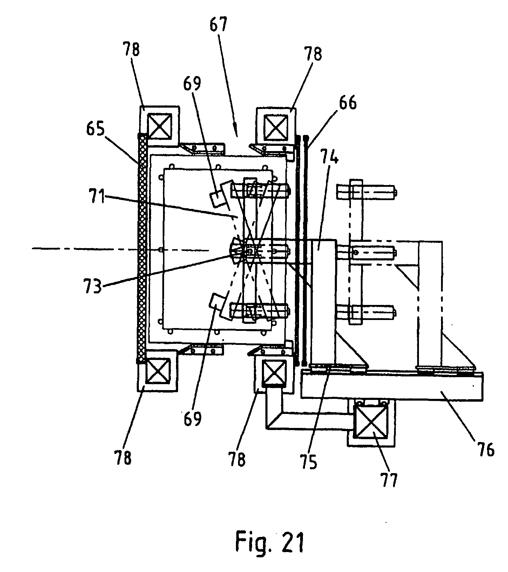

Im Gegensatz zur vorangegangen beschriebenen Laser-Schweißanlage werden die Bauteile 8a und 8b nicht manuell zugeführt, sondern mit Hilfe von Gabelstaplern 80 einer Vorrichtung zum Bereitstellen von Bauteilen zugeführt, die allgemein mit einer 10 gekennzeichnet ist. Die Vorrichtung 110 wird später im Zusammenhang mit den Fig. 16 bis 21 im Detail erläutert, worauf an dieser Stelle verwiesen wird. Im Ergebnis werden jeweils zwei übereinander angeordnete Stapel von Bauteilen 8a und 8b in jeder Vorrichtung 110 bereitgestellt. Zum automatischen Entnehmen der Bauteile 8a und 8b sind Entnahmeroboter 49a und 49b vorgesehen, die jeweils von einen oberen oder unteren Stapel ein Bauteil 8a oder 8b entnehmen und dieses auf entsprechenden Vorpositioniertischen 50a und 50b ablegen. Ausgehend von den Vorpositioniertischen 50a und 50b werden die Bauteile 8a und 8b von den Fügerobotern 35a und 35b abgenommen und dem Bearbeitungstisch 2 zugeführt. Danach erfolgt die Bearbeitung wie zuvor anhand der Fig. 6 beschrieben worden ist.

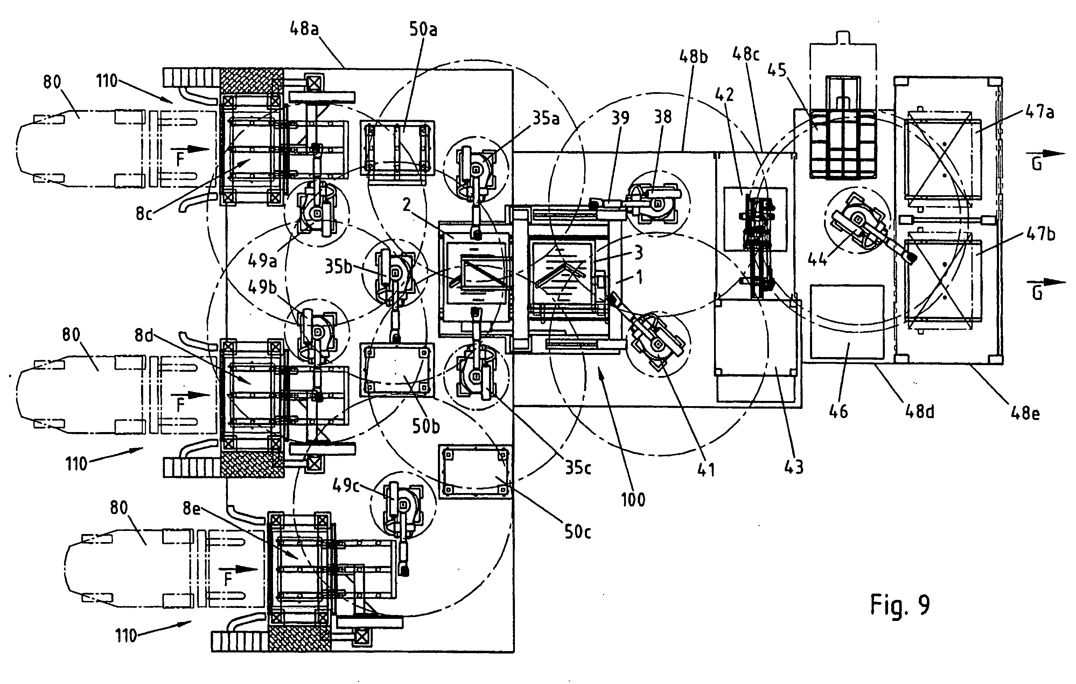

In den Fig. 9 bis 12 ist eine Laser-Schweißanlage dargestellt welche nicht komplett in den Schutzumfang der Ansprüche fällt , wobei gleiche Bezugszeichen gleiche Bauteile bezeichnen wie sie im Zusammenhang mit den zuvor beschriebenen Ausführungsformen im Detail dargestellt worden sind.

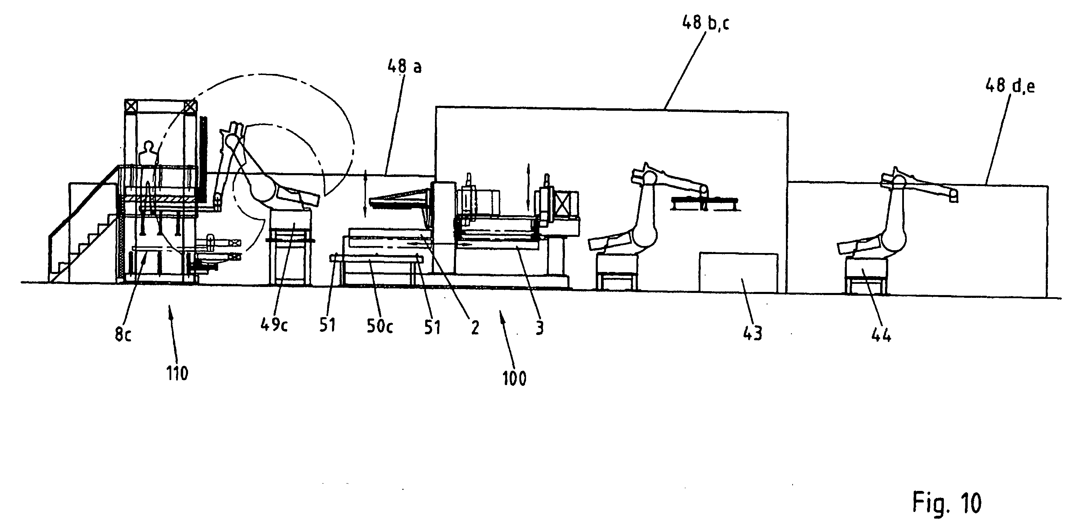

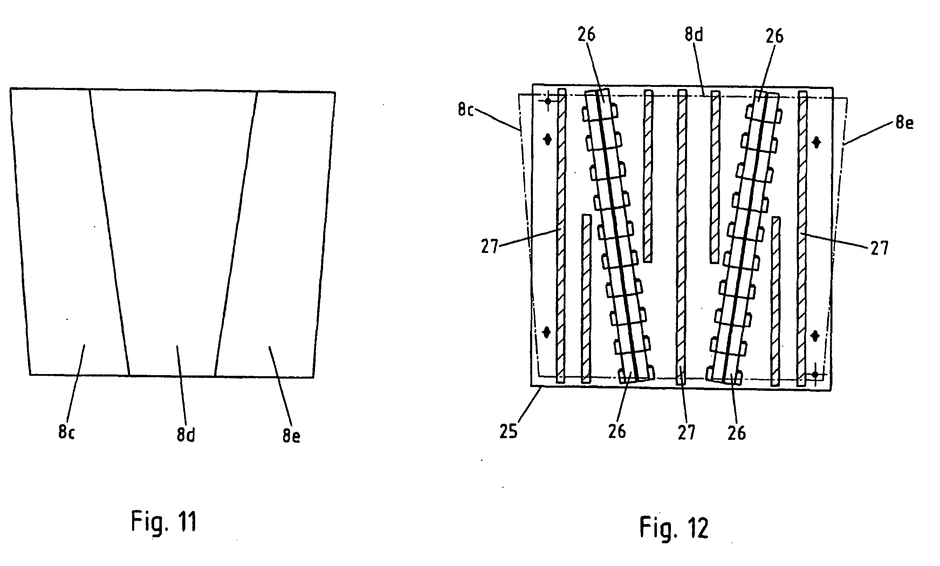

Der Unterschied der Laser-Schweißanlage der Fig. 9 und 10 zu den vorangegangenen Ausführungsformen besteht darin, dass drei Bauteile 8c, 8d und 8e zu einem Bauteil zusammengeschweißt werden sollen, deren Formen in Fig. 11 dargestellt sind. Die zugehörige Bauteilauflage 25 welche nicht in den Schutzumfang der Ansprüche fällt zeigt Fig. 12. Sie ist mit den entsprechend angeordneten Spannmagneten 26 und Bauteilauflageleisten 27 an die Form der Bauteile 8c, 8d und 8e angepasst. Somit ist es erforderlich, dem Doppelverschiebetisch anstelle der zuvor beschriebenen zwei Bauteile nunmehr drei verschiedene Bauteile zuzuführen. Dieses ist in folgender Weise gelöst worden.

Entsprechend des mit den Pfeilen F dargestellten Materialeinlaufes werden mit Hilfe von Gabelstaplern 80 Paletten einer Vorrichtung 110 zum Bereitstellen von Bauteilen zugeführt. Zum automatischen Entnehmen der Bauteile 8c, 8d oder 8e sind Entnahmeroboter 49a, 49b und 49c vorgesehen. Die Entnahmeroboter 49a, 49b und 49c entnehmen jeweils von einem oberen oder unteren Stapel ein Bauteil 8c, 8d oder 8e und legen dieses auf entsprechenden Vorpositioniertischen 50a, 50b bzw. 50c ab. Zur genauen Vorgabe der Position der Bauteile 8c, 8d und 8e sind Zentrierbolzen 51 vorgesehen, siehe Fig. 10. Ausgehend von den Vorpositioniertischen 50a, 50b und 50c werden die Bauteile 8c, 8d und 8e von Fügerobotern 35a, 35b und 35c abgenommen und dem Bearbeitungstisch 2, der in Fig. 9 in der Beladeposition angeordnet ist, zugeführt. Nach einem Wechsel der Bearbeitungstische 2 und 3 werden die drei Bleche 8c, 8d und 8e in der Bearbeitungseinrichtung 1 zusammengeschweißt, wonach das fertiggestellte Bauteil 8 in der im Zusammenhang mit den Fig. 6 und 7 beschriebenen Weise nachbehandelt wird. Auch hier gilt, dass ein eindeutiger Materialfluss von der linken zur rechten Seite in den Fig. 9 und 10 gegeben ist, der wiederum mit den Pfeilen F und G gekennzeichnet ist.

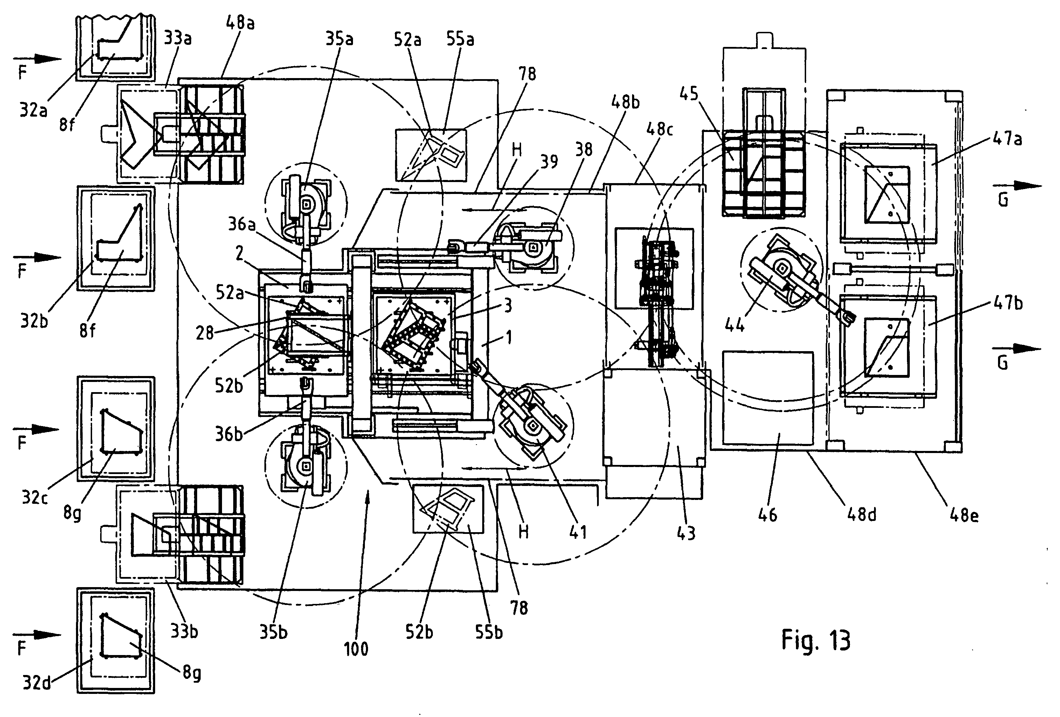

In Fig. 13 ist ein weiteres Ausführungsbeispiel einer Laser-Schweißanlage dargestellt, deren Gesamtaufbau im Wesentlichen mit der in Fig. 6 dargestellten Laser-Schweißanlage mit manueller Zuführung der Bauteile 8a und 8b entspricht. Daher entsprechen gleiche Bezugszeichen gleichen Bauelementen wie bei den vorangegangenen beschriebenen Ausführungsbeispielen.

Der Unterschied zur Ausführungsform gemäß den Fig. 6 und 7 besteht darin, dass im Doppelverschiebetisch 100 eine Vorrichtung zum Bearbeiten von aus einem nicht magnetischen Werkstoff bestehenden Bauteilen integriert ist. Auf den Bauteilauflagen 25 der Bearbeitungstische 2 und 3 sind die zuvor beschriebenen Spannmagnete als Befestigungselemente 26 angeordnet. Die nicht magnetischen Bauteile 8f und 8g werden in der zuvor beschriebenen Weise von den Fügerobotern 35a und 35b auf den Bauteilauflageleisten 27 und den Befestigungselementen 26 angeordnet. Ober den Bauteilen 8f und 8g werden Spannelemente 52a und 52b angeordnet. Somit sind die Spannelemente 52a und 52b auf den den Spannmagneten 26 abgewandten Seiten der Bauteile 8f und 8g angeordnet. Werden die Spannmagnete 26 aktiviert, so drücken die Spannelemente 52a und 52b die beiden Bauteile 8f und 8g an die Bauteilauflage 25 an. Somit wird eine magnetische Befestigung von nicht magnetischen Bauteilen realisiert.

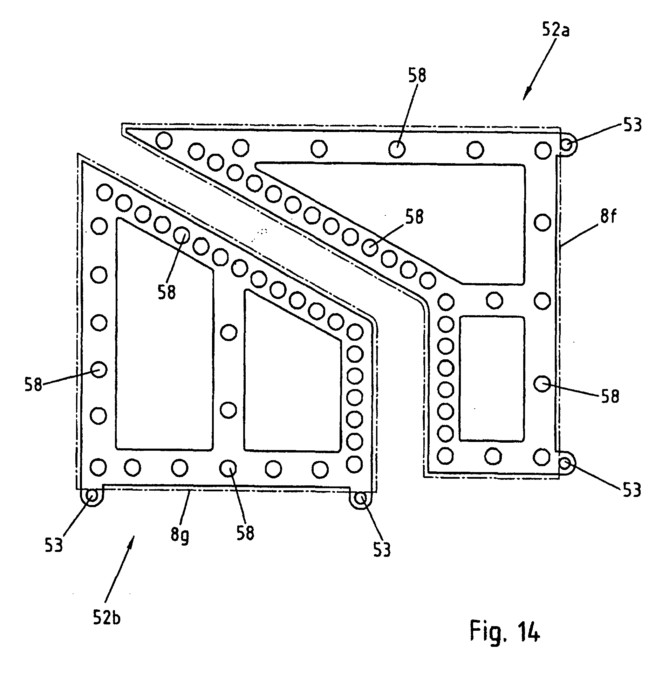

In Fig. 14 sind die beiden Spannelemente 52a und 52b dargestellt, die rahmenförmig beispielsweise aus einem magnetischen Stahl hergestellt sind. In gestrichelten Linien sind die beiden Bauteile 8f und 8g dargestellt, woraus sich ergibt, dass die Spannelemente 52a und 52b jeweils an die Form des zu befestigenden Bauteils 8f und 8g angepasst sind. Somit wird auch bei nicht ausschließlich geradlinigem Verlauf einer Schweißnaht zwischen zwei Bauteilen 8f und 8g gewährleistet, dass insbesondere der Bereich der Schweißnaht gleichmäßig und zuverlässig auf der Bauteilauflage fixiert ist.

Obwohl die Spannelemente 52a und 52b an die äußere Form der Bauteile 8f und 8g angepasst sind, geben die Spannelemente 52a und 52b das jeweilige Bauteil 8f und 8g zumindest entlang des zu bearbeitenden Bereiches also entlang der Schweißnaht des Bauteil 8f bzw. 8g frei. Dieses ist dadurch realisiert, dass die entsprechende äußere Kante des Spannelementes 52a bzw. 52b um einen vorgegebenen Abstand zurückversetzt angeordnet ist. Somit ergibt sich für jedes der separaten Bauteile 8f und 8g ein bauteilspezifisches Spannelement 52a bzw. 52b.

Wie weiterhin in Fig. 14 zu erkennen ist, weisen beide Spannelemente 52a und 52b Zentrieröffnungen 53 auf, die mit an vorgegebenen Positionen auf dem Vorpositioniertisch 33a bzw. 33b angeordnete Zentrierbolzen 51 zusammenwirken. Da die Zentrieröffnungen 53 mit jeweils einer Kante des Bauteils 8f bzw. 8g fluchten, können auch die Bauteile 8f und 8g an den Zentrierbolzen 51 ausgerichtet werden. Somit findet eine gemeinsame Zentrierung von Spannelementen 52a und 52b mit den Bauteilen 8f und 8g statt.

Wie in Fig. 13 dargestellt ist, werden die Spannelemente 52 für die Bearbeitung von nicht magnetischen Bauteilen 8f und 8g mit Hilfe eines Doppelverschiebetisches 100 verwendet. Als weiteres Element sind für beide Spannelemente 52a und 52b Ablagetische 55a und 55b zu beiden Seiten des Doppelverschiebetisches 100 angeordnet. Ein Bearbeitungszyklus erfolgt wie folgt:

Zum Positionieren eines Bauteils 8f nimmt der Fügeroboter 35a zunächst das Spannelement 52a von Ablagetisch 55a und transportiert dieses zum Vorpositioniertisch 33a. Dort wird das Spannelement 52a auf das dort vorpositionierte Bauteil 8f abgesenkt und mittels der Zentrierbolzen werden sowohl das Spannelement 52a als auch das Bauteil 8a aufeinander ausgerichtet und zentriert. Anschließend greift der Fügeroboter 35a sowohl das Spannelement 52a als auch das Bauteil 8a und transportiert beide zusammen zum Bearbeitungstisch 2, der in der Beladeposition angeordnet ist. Dort wird mittels der schwimmenden Fügehand des Fügeroboters 35a das Bauteil 8a zusammen mit dem Spannelement 52a am Anschlagrahmen 28 ausgerichtet und auf der Bauteilauflage 25 positioniert.

In gleicher Weise werden das Spannelement 52b und das nicht magnetische Bauteil 8b auf dem Bearbeitungstisch 2 positioniert.

Nach der Bearbeitung der beiden nichtmagnetischen Bauteile 8a und 8b in der Bearbeitungseinrichtung 1 vor dem Abnehmen des bearbeiteten Bauteils 8 werden zunächst die Spannelemente 52a und 52b vom Entnahmeroboter 38 und dem Wenderoboter 41 vom Bearbeitungstisch 3 abgenommen und auf den entsprechenden Ablagetischen 55a und 55b abgelegt. Dazu wird der Sicherheitsbereich 48b von einer Schiebetür 78 kurzzeitig gegenüber dem Sicherheitsbereich 48a geöffnet, wie mit dem Doppelpfeil dargestellt ist. Die Spannelemente 52a und 52b stehen somit einem neuen Bearbeitungszyklus zur Verfügung. Daraus ergibt sich eine Führung der Spannelemente 52a und 52b im Kreislauf, sodass eine mobile Führung der Spannelemente 52a und 52b realisiert wird, die einem gerichteten Materialstrom während der Verwendung des Doppelverschiebetisches 100 gerecht wird.

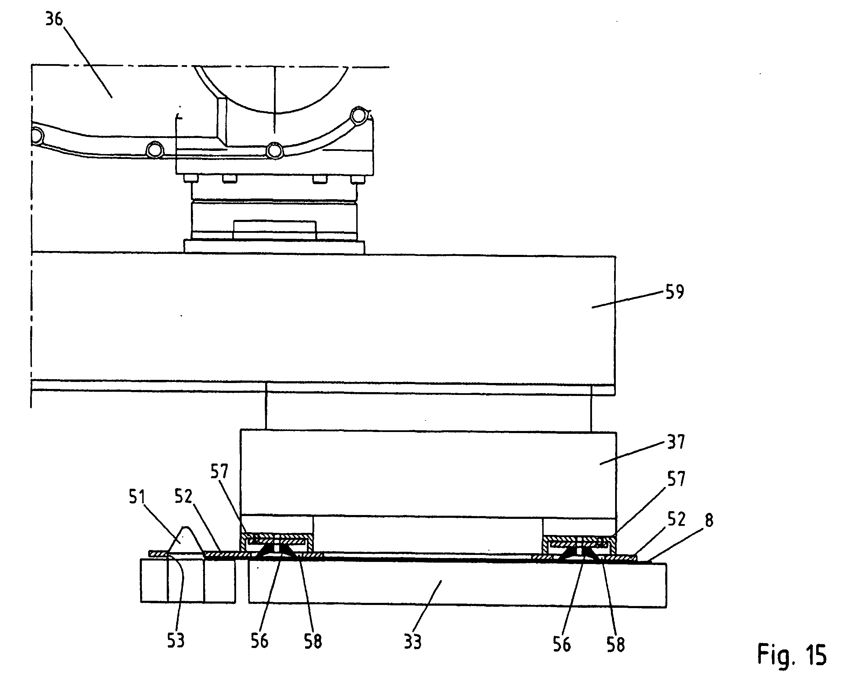

Wie Fig. 15 zeigt, sind die beiden Fügeroboter 35a und 35b in besonderer Weise dafür ausgebildet, sowohl das Spannelement 52 als auch das entsprechende Bauteil 8 zu greifen und den Bearbeitungstisch 2 bzw. 3 zuzuführen. Dazu weisen die Fügeroboter 35 jeweils eine Vorrichtung zum Greifen von zwei separaten Gegenständen mit einem Greifarm 36, mit einem am Greifarm 36 befestigten Saugrahmen 37 und mit einer Mehrzahl von Saugelementen 56 auf, die am Saugrahmen 37 angeschlossen sind. Weiterhin ist eine magnetisch ausgebildete Greifvorrichtung 57 vorgesehen, mit deren Hilfe das Spannelement 52 aus magnetischem Stahl gegriffen werden kann. Dieses geschieht beispielsweise auf dem Ablagetisch 55. Wie in den Fig. 13 und insbesondere 14 dargestellt ist, weist der Rahmen des Spannelementes 52 eine Mehrzahl von Öffnungen 58 auf. Wie Fig. 15 zeigt, erstrecken sich zum Greifen des nicht magnetischen Bauteils 8 die Saugelemente 56 durch die Öffnungen 58 im Spannelement 52 hindurch und kommen am Bauteil 8 zur Anlage. Somit kann die Vorrichtung zum einen das magnetische Spannelement 52 und zum anderen das nicht magnetische Bauteil 8 greifen und zusammen einen Bearbeitungstisch wie beispielsweise dem Bearbeitungstisch 2 bzw. 3 des Doppelverschiebetisches 100 zuführen.

Wie sich aus den Fig. 14 und 15 ergibt, sind dabei sowohl die magnetische Greifvorrichtung 57 als auch der Saugrahmen 37 mit den Saugelementen 56 bauteilspezifisch ausgebildet, also an die äußere Form der zu greifenden Spannelemente 52 und Bauteile 8 angepasst.

In Fig. 15 sieht man zudem die Verwendung des Zentrierbolzens 51, um den sich die Zentrieröffnung 53 des Spannelementes 52 erstreckt. Somit wird das Spannelement 52 relativ zum vorpositionierten Bauteil 8 zentriert, sodass während des Zusammenfügens beider Teile auch eine Zentrierung aufeinander stattfindet.

Wie in Fig. 15 weiter dargestellt ist, ist der Saugrahmen 37 an einer schwimmenden Fügehand befestigt, die aus dem Stand der Technik bekannt ist und mit der eine genaue Positionierung von Bauteilen 8 auf einem Bearbeitungstisch 2 bzw. 3 möglich ist, ohne dass zu große Anlagekräfte auftreten, die zu einer Beschädigung der Bauteilkante führen können.

In den Fig. 8 bis 10, die im vorangegangenen bereits beschrieben worden sind, sind jeweils Vorrichtungen 110 zum Bereitstellen von Bauteilen erwähnt worden. Im Folgenden wird eine detaillierte Darstellung der Vorrichtung 110 an Hand der Fig. 16 bis 21 erfolgen.

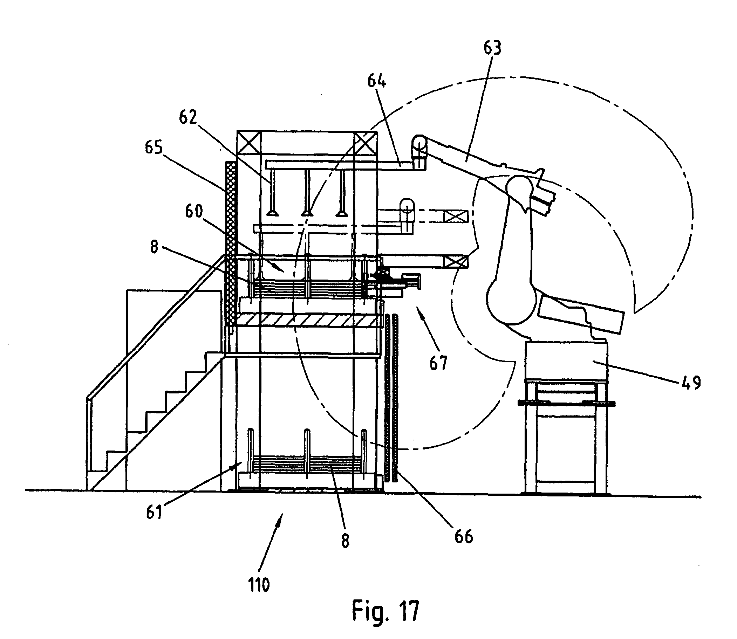

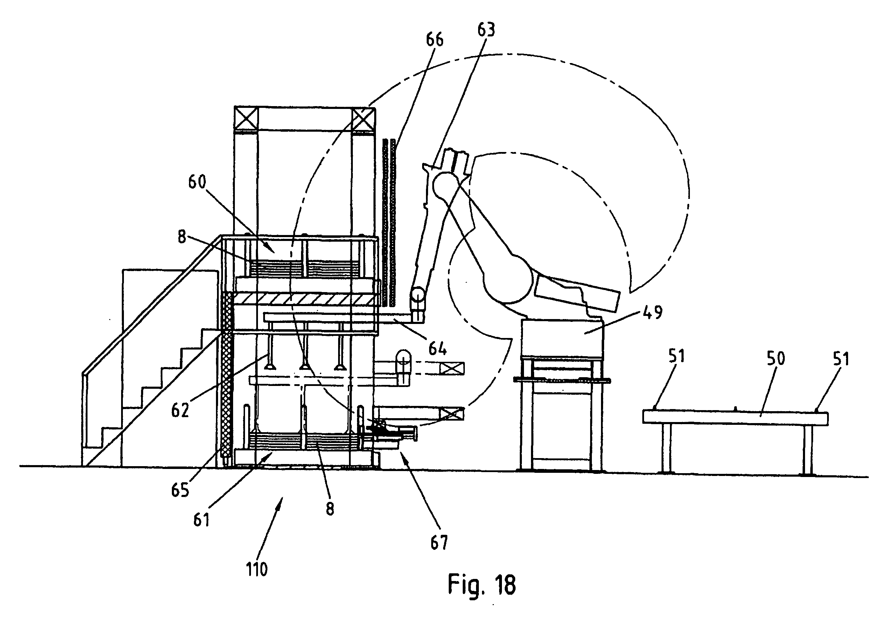

Die Vorrichtung 110 zum Bereitstellen von Bauteilen weist einen ersten Aufnahmebereich 60 zur Aufnahme eines ersten Stapels von Bauteilen 8 sowie einen zweiten Aufnahmebereich 61 zur Aufnahme eines zweiten Stapels von Bauteilen 8 auf. Weiterhin ist eine Abstapelvorrichtung in Form eines Entnahmeroboters 49 vorgesehen, der wahlweise entweder vom ersten Stapel oder vom zweiten Stapel Bauteile 8 abstapelt. Wie insbesondere aus den Fig. 17 und 18 ersichtlich ist, sind die Aufnahmebereiche 60 und 61 übereinander angeordnet, sodass für beide Stapel von Bauteilen 8 nur einmal die dafür erforderliche Grundfläche benötigt wird. Daher können unter minimalem Raumaufwand zwei Stapel von Bauteilen 8 bereitgestellt werden, wie sich insbesondere aus der Draufsicht in Fig. 16 ergibt.

Der Entnahmeroboter 49 weist einen Greifarm 63 auf, an dem ein Saugrahmen 64 befestigt ist. An dem Saugrahmen 64 ist eine Mehrzahl von Saugelementen 62 zum Greifen von Bauteilen 8 angeschlossen. Durch eine entsprechende Ansteuerung des Entnahmeroboter 49 werden dann wahlweise Bauteile 8 entweder vom oberen Stapel im ersten Aufnahmebereich 60, siehe Fig. 17, oder vom unteren Stapel im zweiten Aufnahmebereich 61, siehe Fig. 18, entnommen. Dabei ist in beiden Fig. 17 und 18 jeweils die abgesenkte Position der Saugelemente 62 dargestellt. Werden sämtliche Bauteile 8 eines Stapels vom Entnahmeroboter 49 abgestapelt, so kann danach ohne Zeitverzögerung die Entnahme von Bauteilen 8 vom unteren zweiten Stapel fortgesetzt werden und ein neuer Stapel von Bauteilen 8 kann mit einem Gabelstapler 80 in den ersten Aufnahmebereich 60 gebracht werden. Ist anschließend der zweite Stapel von Bauteilen 8 im zweiten Aufnahmebereich 61 aufgebraucht, so kann die Entnahme von Bauteilen 8 wieder im ersten Aufnahmebereich 60 erfolgen, währenddessen im zweiten Aufnahmebereich ein neuer Stapel von Bauteilen 8 angeordnet wird.

Somit ergibt sich ein turmartiger Aufbau der Vorrichtung 110 zum Bereitstellen von Bauteilen, der eine minimale Grundfläche belegt. Dadurch sind auch die Aufwendungen für die Abschirmung der Aufnahmebereiche 60 und 61 geringer als im Stand der Technik, sodass insbesondere die Herstellungskosten der Vorrichtung 110 verringert werden. Die Herstellungskosten werden wesentlich auch dadurch reduziert, dass keine Verstellvorrichtungen für die Paletten für ein Verstellen zwischen einer Beladeposition und einer Abstapelposition erforderlich sind.

Als Sicherheitsvorrichtungen sind Hubtore 65 und 66 vorgesehen, wobei das Hubtor 65 den Zutritt zum jeweils aktiven Aufnahmebereich 60 bzw. 61 versperrt, während das Hubtor 66 ein Eingreifen des Entnahmeroboter 49 in den jeweils passiven Aufnahmebereich 60 bzw. 61 verhindert. Dieses ergibt sich durch einen Vergleich der Fig. 17 und 18.

Zum sicheren Abstapeln von Bauteilen 8 ist eine Vereinzelungsvorrichtung 67 vorgesehen, die von einer Hubvorrichtung 68 innerhalb der beiden Aufnahmebereiche 60 und 61 verfahren wird. Somit kann die Vereinzelungsvorrichtung jeweils in den aktiven Aufnahmebereich 60 bzw. 61 verfahren werden, aus dem gerade der Entnahmeroboter 49 Bauteile 8 entnimmt. Es können also erneut Kosten gespart werden, da nur eine Vereinzelungsvorrichtung für jede Vorrichtung 110 zum Bereitstellen von Bauteilen 8 erforderlich ist.

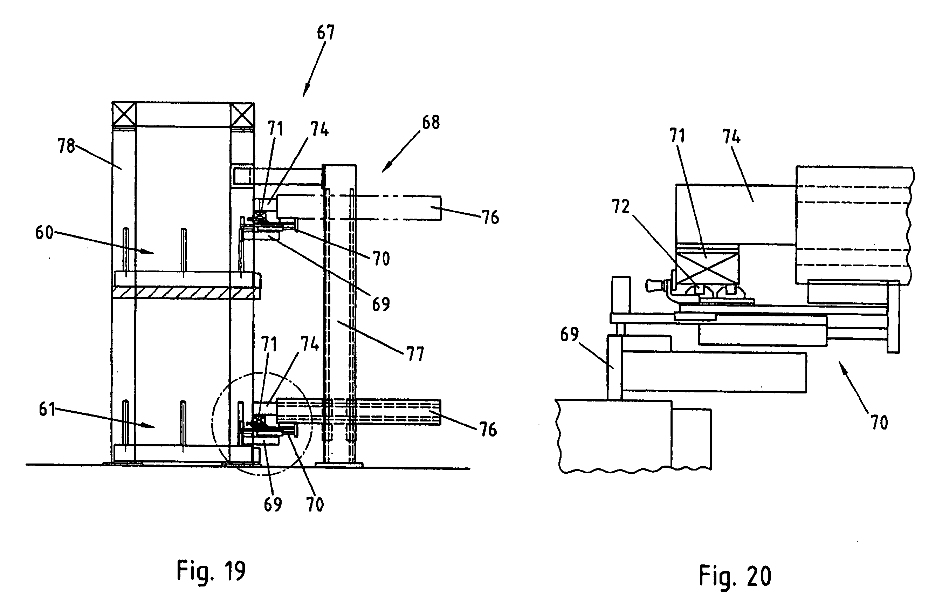

In den Fig. 19 bis 21 sind die Details der Vereinzelungsvorrichtung 67 sowie der Hubvorrichtung 68 dargestellt. Gemäß Fig. 20 weist die Hubvorrichtung einen Vereinzelungsmagneten 69 auf, der horizontal entlang einer Führungsmechanik 70 verfahren werden kann. Die Führungsmechanik 70 wiederum ist linear entlang eines Magnetbalkens 71 verfahrbar angeordnet, wozu eine Führungsmechanik 72 vorgesehen ist. Somit kann die Position jedes Vereinzelungsmagneten 69 entlang des Magnetbalkens 71 individuell eingestellt und somit an die Form eines zu vereinzelnden Bauteils 8 angepasst werden. Der Magnetbalken 71 ist um eine Achse 73 verschwenkbar an einem Hubarm 74 befestigt, der wiederum an einem x-Schlitten 75 befestigt ist. Der x-Schlitten 75 ist linear verstellbar an einem z-Schlitten 76 befestigt, der vertikal verstellbar an einem Gestell 77 befestigt ist. Somit kann die Hubvorrichtung 68 die Vereinzelungsmagneten 69 in beliebige Positionen innerhalb der Aufnahmebereiche 60 und 61 verstellen. Das Gestell 77 wiederum ist mit dem Rahmen 78 der Vorrichtung 110 verbunden.

Zur Verdeutlichung der Bewegung der Vereinzelungsmagneten 69 sowie der Hubvorrichtung 68 sind verschiedene Positionen in gestrichelten Linien dargestellt. Dasselbe gilt für die Fig. 19, in der zwei verschiedene Hubpositionen der Hubvorrichtung 68 in durchgezogenen und gestrichelten Linien dargestellt sind.

## Patentansprüche

1. Verfahren zum Bearbeiten von aus einem vorzugszweise nicht magnetischen Werkstoff bestehenden Bauteilen (8), bei dem
- das Bauteil (8) auf mindestens einem auf einem Bearbeitungstisch (2,3) angeordneten Spannmagneten (26) positioniert wird,
- aus einem magnetischen Werkstoff bestehende Spannelemente (52) auf der dem Spannmagneten (26) abgewandten Seite des Bauteils (8) angeordnet werden und
- die Spannmagnete (26) aktiviert werden und mit Hilfe der Spannelemente (52) das Bauteil (8) in seiner Position fixiert wird,
**dadurch gekennzeichnet, dass**
- mindestens zwei Bauteile (8) auf dem Bearbeitungstisch (2, 3) positioniert und fixiert werden,
- den Bauteilen (8) mindestens zwei Spannelemente (52) zugeordnet sind, die an die Form einer in der Ebene der Auflagefläche verlaufenden Bearbeitungslinie, die keine eindimensionale Gerade ist, angepasst sind und entlang mindesten einer Berührungslinie der Bauteile (8) miteinander einen Bereich vorgegebener Breite freigeben und
- die Bauteile (8) entlang der mindestens einen Berührungslinie miteinander verschweißt werden.

2. Verfahren zum Bearbeiten mindestens eines aus einem vorzugsweise nicht magnetischen Werkstoff bestehenden Bauteil (8), bei dem
- das Bauteil (8) auf mindestens einem auf einem Bearbeitungstisch (2,3) angeordneten Spannmagneten (26) positioniert wird,
- mindestens ein aus einem magnetischen Werkstoff bestehendes Spannelement (52) auf der dem Spannmagneten (26) abgewandten Seite des Bauteils (8) angeordnet wird
- das Bauteil (8) auf dem Bearbeitungstisch (2, 3) positioniert wird und der Spannmagnet (26) aktiviert wird und mit Hilfe des Spannelements (52) das Bauteil (8) in seiner Position fixiert wird,
**dadurch gekennzeichnet, dass**
- das oder die Spannelemente (52) an die Form einer in der Ebene der Auflagefläche verlaufenden Bearbeitungslinie, die keine eindimensionale Gerade ist, angepasst und mit vorgegebenen konstanten Abstand zur Bearbeitungslinie angeordnet sind und
- das Bauteil (8) entlang der mindestens einen Linie zertrennt wird.

3. Verfahren nach Anspruch 1 oder 2, dass die zwei Spannelemente (52) einen Bereich mit vorgegebener Breite entlang der Bearbeitungslinie freigeben.

4. Verfahren nach Anspruch 1, 2 oder 3, bei dem nach der Bearbeitung des mindestens einen Bauteils (8) zunächst das mindestens eine Spannelement (52) vom Bearbeitungstisch (2, 3) abgenommen wird, das mindestens eine Spannelement (52) auf mindestens einem Ablagetisch (55) positioniert wird, das mindestens eine bearbeitete Bauteil (8) vom Bearbeitungstisch (2, 3) abgenommen wird und das auf dem Ablagetisch (55) abgelegte Spannelement (52) für einen neuen Beladevorgang abgenommen wird und auf dem mindestens einen Bauteil (8) auf dem in der Beladeposition angeordneten Bearbeitungstisch (2, 3) positioniert wird.

5. Verfahren nach einem der Ansprüche 1 bis 4,
bei dem mit Hilfe eines Greifarmes (36) zuerst das Spannelement (52) mit Hilfe einer Greifvorrichtung (57) und dann das Bauteil (8) mit Hilfe von Saugelementen (56) gegriffen werden und bei dem das Spannelement (52) und das Bauteil (8) zusammen auf den Bearbeitungstisch (2, 3) positioniert werden.

6. Vorrichtung zum Bearbeiten mindestens eines aus einem vorzugsweise nichtmagnetischen Werkstoff bestehenden Bauteiles (8),
- mit mindestens einem eine Bauteilauflage (25) aufweisenden Bearbeitungstisch (2, 3),
- mit mindestens einem auf der Bauteilauflage (25) angeordneten Spannmagnet (26) und
- mit mindestens einem aus einem magnetischen Werkstoff bestehenden Spannelement (52),
- wobei das Bauteil (8) auf dem mindestens einen Spannmagneten (26) angeordnet ist,
- das Spannelement (52) auf der dem Spannmagneten (26) abgewandten Seite des Bauteils (8) angeordnet ist und
- die Auflagefläche des Spannelementes (52) an die Form des zu befestigenden Bauteils (8) angepasst ist
**dadurch gekennzeichnet, dass** das Spannelement (52) an die Form einer in der Ebene der Auflagefläche verlaufenden Bearbeitungslinie, die keine eindimensionale Gerade ist, angepasst ist und das Bauteil (8) zumindest entlang der Bearbeitungslinie des Bauteils (8) freigibt.

7. Vorrichtung nach Anspruch 6, **dadurch gekennzeichnet, dass** für jedes einer Mehrzahl von separaten Bauteilen (8) ein bauteilspezifisches Spannelement (52) vorgesehen ist.

8. Vorrichtung nach Anspruch 6 oder 7,
**dadurch gekennzeichnet, dass** eine äußeren Kante des Spannelementes (52) entlang einer zu bearbeitenden Kante des Bauteils (8) um einen vorgegebenen Abstand zurückversetzt angeordnet ist.

9. Vorrichtung nach einem der Ansprüche 6 bis 8,
**dadurch gekennzeichnet, dass** Zentrierbolzen (51) zum Positionieren des mindestens einen Spannelementes (52) relativ zum mindestens einen Bauteil (8) vorgesehen sind.

10. Vorrichtung nach einem der Ansprüche 6 bis 9,
**dadurch gekennzeichnet, dass** der Bearbeitungstisch (2, 3) abwechselnd eine Beladeposition oder eine Bearbeitungs- und Entnahmeposition einnimmt.

11. Vorrichtung nach einem der Ansprüche 6 bis 10,
**dadurch gekennzeichnet, dass** für jedes verwendete Spannelement (52) beabstandet zu der Beladeposition und der Bearbeitungs- und Entnahmeposition des Bearbeitungstisches (2, 3) ein Ablagetisch (55) vorgesehen ist.

12. Vorrichtung nach Anspruch 6 in Kombination mit einer Vorrichtung zum Greifen von zwei separaten Gegenständen
- mit einen Greifarm (36),
- mit einem am Greifarm (36) befestigen Saugrahmen (37) und
- mit einer Mehrzahl von Saugelementen (56), die am Saugrahmen (37) angeschlossen sind,
**dadurch gekennzeichnet,**
- **dass** eine Greifvorrichtung (57) zum Greifen eines ersten Gegenstandes (52) am Greifarm (36) befestigt ist und
- **dass** sich die Saugelemente (56) durch eine im ersten Gegenstand (52) ausgebildete Öffnung (58) hindurch erstrecken und den zweiten Gegenstand (8) greifen.

13. Vorrichtung nach Anspruch 12,
**dadurch gekennzeichnet, dass** die Greifvorrichtung (57) bauteilspezifisch ausgebildet ist.

14. Vorrichtung nach Anspruch 12 oder 13,
**dadurch gekennzeichnet, dass** die Greifvorrichtung (57) mechanisch oder magnetisch ausgebildet ist.

15. Vorrichtung nach einem der Ansprüche 12 bis 14,
**dadurch gekennzeichnet, dass** der Saugrahmen (37) und die Saugelemente (56) bauteilspezifisch ausgebildet sind.

16. Vorrichtung nach einem der Ansprüche 12 bis 15,
**dadurch gekennzeichnet, dass** der erste Gegenstand als Spannelement (52) aus einem magnetischen Werkstoff ausgebildet ist und dass der zweite Gegenstand als Bauteil (8) aus einem nicht magnetischen Werkstoff ausgebildet ist.

## Claims

1. A method for machining of components (8) preferably consisting of a non-magnetic material,
• whereby said component (8) is positioned on at least one clamping magnet (26) arranged on a machining table (2,3),
• whereby clamping elements (52) consisting of a magnetic material are arranged on that side of the component (8) which is averted from the clamping magnet (26), and
• whereby the clamping magnets (26) are activated and whereby the component (8) is fixed in its position by the aid of clamping elements (52);
**characterized in that**
• at least two components (8) are positioned and fixed on the machining table (2,3),
• at least two clamping elements (52) are allocated to said components (8), with said clamping elements being adapted to the shape of a machining line extending in the plane of the support area, said machining line being no one-dimensional straight line, and which release an area of a predefined width along at least one contact line of said components (8), and
• said components (8) are welded with each other along at least one contact line.

2. A method for machining of at least one component (8) preferably consisting of a non-magnetic material, whereby
• said component (8) is positioned on at least one clamping magnet (26) arranged on the machining table (2,3),
• at least one clamping element (52) consisting of a magnetic material is arranged at the side of the component (8) which is averted from the clamping magnet (26),
• said component (8) is positioned on the machining table (2,3) and the c lamping magnet (26) is activated and wherein the component (8) is fixed in its position by the aid of the clamping element (52),
**characterized in that**
• said clamping element(s) (52) is/are adapted to the shape of a machining line extending in the plane of the support area, said machining line being no one-dimensional straight line, and is/are arranged at a predefined constant distance to the machining line, and
• said component is decomposed along at least one line.

3. A method pursuant to any of Claims 1 or 2, wherein the two clamping elements (52) expose an area of a pre-defined width along the machining line.

4. A method pursuant to any one of the preceding Claims 1, 2 or 3, in which after machining of at least one component (8), at least one clamping element (52) is initially taken-off from the machining table (2,3), whereby at least one clamping element (52) is positioned on at least one deposition table (55), and wherein at least one machined component (8) is taken-off from the machining table (2,3) and wherein the clamping element (52) deposited on the deposition table (55) is taken-off for a n ew charging procedure and positioned on at least one component (8) arranged in charging position on the machining table (2,3).

5. A method pursuant to any one of the preceding claims 1 to 4, whereby initially, by the aid of a grab arm (36), the clamping element (52) is grabbed by means of a grabbing device (57), and then the component (8) is grabbed by the aid of suction elements (56) and in which the clamping element (52) and the component (8) are jointly positioned on the machining table (2, 3).

6. A d evice for m achining at least o ne c omponent ( 8) preferably consisting of a non-magnetic material,
• with at least one machining table (2,3) having a component support (25),
• with at least one clamping magnet (26) arranged on the component support (25), and
• with at least one clamping element (52) consisting of a magnetic material,
• wherein said component (8) is arranged on at least one clamping magnet (26),
• wherein the clamping element (52) is arranged at the side of the component (8) which is averted from the clamping magnet (26), and
• wherein the support area of the clamping element (52) is adapted to the shape of the component to be fixed,
**characterized in that** the clamping element (52) is adapted to the shape of a machining line extending in the plane of the support area, said machining line being no one-dimensional straight line, and wherein said clamping element releases the component (8) at least along the machining line of said component (8).

7. A device pursuant to Claim 6, **characterized in that** a component-specific clamping element (52) is provided for each of a multitude of separate components (8).

8. A device pursuant to any one of Claims 6 or 7, **characterized in that** an outer edge of the clamping element (52) is arranged along an edge of the component (8) to be machined and set back by a predefined distance.

9. A device pursuant to any one of Claims 6 to 8, **characterized in that** centring bolts (51) are provided for positioning of at least one clamping element (52) relative to at least one component (8).

10. A device pursuant to any one of the preceding Claims 6 to 9, **characterized in that** the machining table (2,3) alternately assumes a charging position or a machining and discharging position.

11. A device pursuant to any one of the preceding Claims 6 to 10, **characterized in that** a deposition table (55) is provided for each applied clamping element (52) at a distinct distance to the charging position and to the machining and discharging position of the machining table (2,3).

12. A device pursuant to Claim 6 in combination with a device for grabbing of two separate objects
• with a grab arm (36)
• with a suction frame (37) affixed to said grab arm (36), and
• with a multitude of suction elements (56) that are connected to the suction frame (37),
**characterized in that**
• a grabbing device (57) for grabbing of a first object (52) is affixed to the grab arm (36), and
• that the suction elements (56) extend through an opening (58) configured in the first object (52) and grab the second object (8).

13. A device pursuant to Claim 12, **characterized in that** the grabbing device (57) is of a component-specific design and construction.

14. A device pursuant to Claim 12 or 13, **characterized in that** the grabbing device (57) is of a mechanical or magnetic design and construction.

15. A device pursuant to any one of the preceding Claims 12 to 14, **characterized in that** the suction frame (37) and the suction elements (56) are of a component-specific design and construction.

16. A device pursuant to any one of the preceding Claims 12 to 15, **characterized in that** the first object is designed and constructed as clamping element (52) made of a magnetic material and that the second object is designed and constructed as component (8) made of a non-magnetic material.

## Revendications

1. Procédé pour usiner des pièces (8), fabriquées à partir d'une matière de préférence non magnétique, selon lequel
- la pièce (8) est positionnée sur au moins un aimant de serrage (26) disposé sur une table d'usinage (2,3),
- des éléments de serrage (52) fabriqués à partir d'une matière magnétique sont disposés sur le côté de la pièce (8) opposé à l'aimant de serrage (26) et
- les aimants de serrage (26) sont activés et la pièce (8) est fixée dans sa position à l'aide des éléments de serrage (52),
**caractérisé en ce que**
- deux pièces (8) au moins sont positionnées et fixées sur la table d'usinage (2,3),
- deux éléments de serrage (52) au moins sont affectés aux pièces (8), lesdits éléments de serrage étant adaptés à la forme d'une ligne d'usinage se déployant dans le plan de la surface d'appui et n'étant pas une ligne droite unidimensionnelle et dégageant au moins une zone de largeur prédéfinie le long d'au moins une ligne de contact entre les pièces (8) et
- les pièces (8) sont soudées l'une à l'autre le long de la ligne de contact au moins existante.

2. Procédé pour usiner au moins une pièce, (8) fabriquée à partir d'une matière de préférence non magnétique, selon lequel
- la pièce (8) est positionnée sur au moins un aimant de serrage (26) disposé sur une table d'usinage (2,3),
- au moins un élément de serrage (52) fabriqué à partir d'une matière magnétique est disposé sur le côté de la pièce (8) opposé à l'aimant de serrage (26) et
- la pièce (8) est positionnée sur la table d'usinage (2,3) et l'aimant de serrage (26) est activé et la pièce (8) est fixée dans sa position à l'aide de l'élément de serrage (52),
**caractérisé en ce que**
- l'élément ou les éléments de serrage (52) sont adaptés à la forme d'une ligne d'usinage se déployant dans le plan de la surface d'appui et n'étant pas une ligne droite unidimensionnelle, et étant disposés avec un écart constant prédéfini par rapport à la ligne d'usinage et
- la pièce (8) est séparée le long de la ligne au moins existante.

3. Procédé selon la revendication 1 ou 2, **caractérisé en ce que** les deux éléments de serrage (52) dégagent une zone d'une largeur prédéfinie le long de la ligne d'usinage.

4. Procédé selon la revendication 1, 2 ou 3 selon lequel après l'usinage de la pièce (8) au moins existante, l'élément de serrage (52) au moins existant est enlevé de la table d'usinage (2,3), l'élément de serrage (52) au moins existant est positionné sur au moins une table de dépose (55), la pièce usinée (8) au moins existante est enlevée de la table d'usinage (2,3) et l'élément de serrage (52) déposé sur la table de dépose (55) est enlevé pour une nouvelle opération de chargement et est positionné sur la pièce (8) au moins existante sur la table d'usinage (2, 3) disposée dans la position de chargement.

5. Procédé selon l'une des revendications 1 à 4,
selon lequel, à l'aide d'un bras preneur (36), l'élément de serrage (52) est d'abord pris à l'aide d'un dispositif de préhension (57) et ensuite la pièce (8) à l'aide d'éléments ventouses (56) et selon lequel l'élément de serrage (52) et la pièce (8) sont positionnés ensemble sur la table d'usinage (2, 3).

6. Dispositif pour usiner au moins une pièce (8) composée de préférence d'une matière non magnétique,
- avec au moins une table d'usinage (2,3) présentant un support de pièce (25),
- avec au moins un aimant de serrage (26) disposé sur le support de pièce (25),
- avec au moins un élément de serrage (52) composé d'une matière magnétique,
- la pièce (8) étant disposée sur l'aimant magnétique au moins existant (26),
- l'élément de serrage (52) étant disposé sur le côté de la pièce (8) opposé à l'aimant de serrage (26) et
- la surface d'appui de l'élément de serrage (52) étant adaptée à la forme de la pièce à fixer,
**caractérisé en ce que** l'élément de serrage (52) est adapté à la forme d'une ligne d'usinage, se déployant dans le plan de la surface d'appui et n'étant pas une ligne droite unidimensionnelle et libèrant la pièce (8) au moins le long de la ligne d'usinage de la pièce (8).

7. Dispositif selon la revendication 6, **caractérisé en ce que** pour chacun d'un nombre multiple de pièces séparées (8) est prévu un élément de serrage (52) spécifique de la pièce.

8. Dispositif selon la revendication 6 ou 7,
**caractérisé en ce qu'**une arête extérieure de l'élément de serrage (52) est disposée le long d'une arête à usiner de la pièce (8) en étant décalée en arrière d'une distance prédéfinie.

9. Dispositif selon la revendication 6 à 8,
**caractérisé en ce que** l'axe de centrage (51 ) servant au positionnement de l'élément de serrage (52) au moins existant est prévu relativement à la pièce (8) au moins existante.

10. Dispositif selon la revendication 6 à 9,
**caractérisé en ce que** la table d'usinage (2,3) prend alternativement une position de chargement ou une position d'usinage et d'enlèvement.

11. Dispositif selon l'une des revendications 6 à 10,
**caractérisé en ce que** pour chaque élément de serrage (52) utilisé, une table de dépose (55) est prévue à une distance de la position de chargement et de la position d'usinage et d'enlèvement de la table de travail (2,3).

12. Dispositif selon la revendication 6 en combinaison avec un dispositif pour la préhension de deux objets différents
- avec un bras preneur (36),
- avec un cadre ventouse (37) fixé au bras preneur (36),
- avec un nombre multiple d'éléments ventouses (56) qui sont raccordés au cadre ventouse (37),
**caractérisé en ce**
- **qu'**un dispositif de préhension (57) est fixé au bras preneur (36) pour la préhension d'un premier objet (52),
- **que** les éléments ventouses (56) avancent par une ouverture (58) formée dans le premier objet (52) et saisissent le deuxième objet (8).

13. Dispositif selon la revendication 12,
**caractérisé en ce que** le dispositif de préhension (57) est formé spécifiquement à la pièce.

14. Dispositif selon la revendication 12 ou 13,
**caractérisé en ce que** le dispositif de préhension (57) est mécanique ou magnétique.

15. Dispositif selon une des revendications 12 à 14,
**caractérisé en ce que** le cadre ventouse (37) et les éléments ventouses (56) sont formés spécifiquement à la pièce.

16. Dispositif selon la revendication 12 à 15,
**caractérisé en ce que** le premier objet est constitué en tant qu'élément de serrage (52) fabriqué à partir d'une manière magnétique et que le deuxième objet est constitué en tant que pièce (8) fabriquée à partir d'une matière non magnétique.
